# EUROPEAN PATENT APPLICATION

(11) **EP 1 906 605 A1**
(43) Date of publication of application: **02.04.2008**
(21) Application number: 07106123.8
(22) Date of filing: 13.04.2007
(51) Int. Cl.: H04L 12/56, H04L 29/06, H04M 7/12

(54) **IP telephone system and telephone exchange**

(30) Priority: 29.09.2006 JP 2006269859
(71) Applicant: Kabushiki Kaisha Toshiba, Tokyo 105-8001 (JP)
(72) Inventor: Ebisawa, Yoshimitsu, Toshiba Corporation, Tokyo (JP)
(74) Representative: Henkel, Feiler & Hänzel

(57) **Abstract**

According to one embodiment, an IP telephone system that enables a first telephone terminal and a second telephone terminal to communicate with each other using an internet protocol, includes: a detection unit that, when the first and second telephone terminals communicate with each other through a first communication route, detects a communication fault in a communication between the first and second telephone terminals; and a controller that switches a communication route from the first communication route to a second communication route different from the first communication route.

## Description

### CROSS-REFERENCE TO RELATED APPLICATIONS

This application is based upon and claims the benefit of priority from Japanese Patent Application No. 2006-269859, filed September 29, 2006, the entire contents of which are incorporated herein by reference.

### BACKGROUND

### 1. Field

One embodiment of the invention relates to an Internet Protocol (IP) telephone system and a telephone exchange.

### 2. Description of the Related Art

In recent years, a network telephone system (IP telephone system) for transmitting and receiving an image and voice bidirectionally as packet data in real time through an IP network has been widely used. In the IP telephone system, users can not only perform extension-to-extension communication and outside call originating and terminating in each main apparatus connected to the IP network, but also perform extension communication and outside call originating and terminating between main apparatuses through the IP network.

Since the IP telephone system uses the Internet and an intranet as communication channels, machines and providers existing therein are various from those having high reliability to those having low reliability and license, etc., is not required for connection or construction and consequently the Internet and the intranet are inferior in reliability to the conventional telephone network, etc.

For example, a telephone for business in a small-scale office may be connected to an inexpensive non-intelligent hub for a consumer like any other PC and network machine. When a fault occurs in the hub or a cable in such an environment, whole telephone system cannot be used. The fault is not indicated, etc., the manager is informed of the fault with a delay, the time period during which the system is not available is prolonged, the point where a problem is involved cannot immediately be located, and it takes time in recovery.

Japanese Patent Application Publication (KOKAI) No. 2004-15276 discloses a technique of measuring the Internet telephone calling quality in a telephone exchange such as an IP telephone apparatus and switching from the Internet line to a usual telephone line when the quality deteriorates less than the threshold value.

However, the described technique is a technique of switching from the Internet line to a usual telephone line and is not a technique of making a detour through another route on the Internet line.

### SUMMARY

The present invention has been made in view of the above circumstances and provides an IP telephone system and a telephone exchange. According to embodiments of the present invention, the IP telephone system and a telephone exchange is able to continue telephone calling and call terminating (incoming call) when a fault occurs in an IP telephone control card or a LAN cable, a switching hub, a router, a provider, etc., connected to the IP telephone control card.

An aspect of the invention provides an IP telephone system that enables a first telephone terminal and a second telephone terminal to communicate with each other using an internet protocol and includes: a detection unit that, when the first and second telephone terminals communicate with each other through a first communication route, detects a communication fault in a communication between the first and second telephone terminals; and a controller that switches a communication route from the first communication route to a second communication route different from the first communication route.

The first telephone terminal may be connected to a first IP network among a plurality of IP networks that are connected one another through a plurality of connection units. The second telephone terminal may be connected to a second IP network among the plurality of IP networks. The first communication route may include a part of the IP networks and a part of the connection units connecting the part of the IP networks. The second communication route may include other part of the IP networks and other part of the connection units.

The IP telephone system may further include a telephone exchange to which the first and second telephone terminals are connected and that connected to an IP network, and includes a plurality of interface units. A telephone terminal connected to the IP network and either a telephone terminal connected to the IP network or a telephone terminal connected to the telephone exchange communicate with each other through at least a part of the interface units. The first communication route may include one of the interface units. The second communication route may include another one of the interface units different from the one of the interface units.

The second telephone terminal may be connected to the IP network.

Both the first and second telephone terminals may be connected to the IP network.

The telephone exchange may include first and second telephone exchanges. The first and second telephone terminals may be connected to the IP network. The one of the interface units maybe included in the first telephone exchange. The another one of the interface units may be included in the second telephone exchange.

The detection unit and the controller may be provided in a server connected to the IP network.

The first telephone terminal may be connected to a first telephone exchange to which a second telephone exchange is connected by a private line, the first and second telephone exchanges may be connected to an IP network. The second telephone terminal may be connected to the IP network. The first communication route may include the first telephone exchange. The second communication route may include the second telephone exchange and the private line.

According to the configuration, when a connection unit or an interface unit causes a communication fault between the first and second telephone terminals during communication and causes a failure in continuing communication, the controller automatically switches the communication route to another communication route through a normal connection unit or interface unit and consequently the communication are continued.

Another aspect of the invention provides a telephone exchange to which a plurality of telephone terminals are connectable and that includes a plurality of interface units through which the telephone terminals are capable of communicating with an IP network by registering a first management table stored in a registration server connected to the IP network. The first management table associates connection IDs identifying the interface units and line IDs identifying a plurality of lines on the IP network. The telephone exchange includes: a detection unit that detects a communication fault in a communication through each of the interface units including first and second interface units; and a controller that, when the detection unit detects a communication fault in a communication through the first interface unit, generates a second management table that associates a line ID associated with a connection ID for the first interface unit in the first management table, with a second connection ID for the second interface unit and updates the first management table to the second management table.

According to the configuration, for example, the optimum connection ID and line ID are associated with each other in response to fault occurrence involved in communication in an interface unit to generate the second management table, and the first management table registered in the registration server on the IP network is updated to the second management table. Therefore, if the interface unit cannot be used due to fault occurrence, the second management table to which the first management table is updated can be registered in the registration server, so that the interface unit used in connecting to the IP network is automatically switched to the normal interface unit and consequently call terminating (incoming call) control can be continued.

Another aspect of the invention provides a telephone exchange to which a plurality of telephone terminals are connectable and that includes a plurality of interface units through which the telephone terminals are capable of communicating with an IP network by registering a first management table stored in a registration server connected to the IP network. The first management table associates connection IDs identifying the interface units and line IDs identifying a plurality of lines on the IP network. The telephone exchange includes: a detection unit that detects a communication fault in a communication through each of the interface units including first and second interface units; and a controller that, when the detection unit detects a communication fault in a communication through the first interface unit, assigns a connection ID for the first interface unit to a connection ID for the second interface unit, and controls the second interface unit to notify the assigned connection ID to the IP network.

The second interface unit may be for standby use. The controller may include a notifying unit that controls the second interface unit to notify the assigned connection ID to the IP network.

According to the configuration, for example, the connection ID is assigned as the connection ID of a second interface unit which operates normally in response to fault occurrence involved in communication in an interface unit. Therefore, when the interface unit cannot be used due to fault occurrence, the interface unit used in connecting to the IP network is automatically switched to the normal interface unit without re-registration in the registration server and consequently communication and call terminating (incoming call) control can be continued.

Another aspect of the invention provides an IP telephone system wherein a plurality of telephone terminals are connected to a plurality of telephone exchanges that are connectable to an IP network. The telephone exchanges includes first and second telephone exchanges connected with each other by a private line and the telephone terminals are capable of communicating with an IP network through a plurality of interface units using a first management table stored in a registration server connected to the IP network. The first management table associates connection IDs identifying the interface units and line IDs identifying a plurality of lines on the IP network. The IP telephone system includes: a detection unit that detects a communication fault in a communication through each of the interface units including first and second interface units provided in the first and second telephone exchanges, respectively; and a controller that when the detection units detects a communication fault in a communication through the first interface unit in the first telephone exchange, generates a second management table that assigns a line ID associated with a connection ID for the first interface unit in the first management table, to a second connection ID for the second interface unit in the second telephone exchange, and updates the first management table to the second management table.

According to the configuration as described above, the IP telephone system and the telephone exchange make it possible to continue telephone calling and call terminating (incoming call) when a fault occurs in an IP telephone control card or a LAN cable, a switching hub, a router, a provider, etc., connected to the IP telephone control card.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

FIG. 1 is an exemplary drawing to show the schematic configuration of an IP telephone system according to a first embodiment of the invention;

FIG. 2 is an exemplary sequence chart to show the operation of detecting fault occurrence in a router according to the first embodiment of the invention;

FIG. 3 is an exemplary sequence chart to show the operation of switching the communication route at the fault occurrence time according to the first embodiment of the invention;

FIG. 4 is an exemplary flowchart to show a control processing procedure of a telephone calling center at the fault occurrence time according to the first embodiment of the invention;

FIG. 5 is an exemplary drawing to show the schematic configuration of an IP telephone system according to a second embodiment of the invention;

FIG. 6 is an exemplary sequence chart to show the operation of detecting fault occurrence in an IP telephone control card interface unit according to the second embodiment of the invention;

FIG. 7 is an exemplary sequence chart to show the operation of switching the communication route at the fault occurrence time according to the second embodiment of the invention;

FIG. 8 is an exemplary flowchart to show a control processing procedure among a CPU and IP telephone control card interface units of an IP telephone apparatus and IP telephone terminals at the fault occurrence time according to the second embodiment of the invention;

FIG. 9 is an exemplary flowchart to show the control processing procedure among the CPU and the IP telephone control card interface units of the IP telephone apparatus and the IP telephone terminals at the fault occurrence time according to the second embodiment of the invention;

FIG. 10 is an exemplary sequence chart to show the switching operation at the fault occurrence time according to a first modified example of the second embodiment;

FIG. 11 is an exemplary sequence chart to show the switching operation at the fault occurrence time according to the first modified example of the second embodiment;

FIG. 12 is an exemplary sequence chart to show the switching operation at the fault occurrence time according to the first modified example of the second embodiment;

FIG. 13 is an exemplary sequence chart to show the switching operation at the fault occurrence time according to the first modified example of the second embodiment;

FIG. 14 is an exemplary sequence chart to show the switching operation at the fault occurrence time according to the first modified example of the second embodiment;

FIG. 15 is an exemplary sequence chart to show the switching operation at the fault occurrence time according to a second modified example of the second embodiment;

FIG. 16 is an exemplary sequence chart to show the switching operation at the fault occurrence time according to the second modified example of the second embodiment;

FIG. 17 is an exemplary sequence chart to show the switching operation at the fault occurrence time according to the second modified example of the second embodiment;

FIG. 18 is an exemplary sequence chart to show the switching operation at the fault occurrence time according to the second modified example of the second embodiment;

FIG. 19 is an exemplary sequence chart to show the switching operation at the fault occurrence time according to the second modified example of the second embodiment;

FIG. 20 is an exemplary sequence chart to show the switching operation at the fault occurrence time according to a third modified example of the second embodiment;

FIG. 21 is an exemplary sequence chart to show the switching operation at the fault occurrence time according to the third modified example of the second embodiment;

FIG. 22 is an exemplary sequence chart to show the switching operation at the fault occurrence time according to the third modified example of the second embodiment;

FIG. 23 is an exemplary sequence chart to show the switching operation at the fault occurrence time according to the third modified example of the second embodiment;

FIG. 24 is an exemplary sequence chart to show the switching operation at the fault occurrence time according to the third modified example of the second embodiment;

FIG. 25 is an exemplary sequence chart to show the switching operation at the fault occurrence time according to a fourth modified example of the second embodiment;

FIG. 26 is an exemplary sequence chart to show the switching operation at the fault occurrence time according to the fourth modified example of the second embodiment;

FIG. 27 is an exemplary sequence chart to show the switching operation at the fault occurrence time according to the fourth modified example of the second embodiment;

FIG. 28 is an exemplary sequence chart to show the switching operation at the fault occurrence time according to the fourth modified example of the second embodiment;

FIG. 29 is an exemplary sequence chart to show the switching operation at the fault occurrence time according to the fourth modified example of the second embodiment;

FIG. 30 is an exemplary drawing to show the schematic configuration of an IP telephone system according to a third embodiment of the invention;

FIG. 31 is an exemplary sequence chart to show the operation of detecting fault occurrence in an Internet provider SPA according to the third embodiment of the invention;

FIG. 32 is an exemplary sequence chart to show the operation of switching the communication route at the fault occurrence time according to the third embodiment of the invention;

FIG. 33 is an exemplary flowchart to show a control processing procedure among IP telephone apparatus and IP telephone terminals at the fault occurrence time according to the third embodiment of the invention;

FIG. 34 is an exemplary flowchart to show the control processing procedure among the IP telephone apparatus and the IP telephone terminals at the fault occurrence time according to the third embodiment of the invention;

FIG. 35 is an exemplary drawing to show the schematic configuration of an IP telephone system according to a fourth embodiment of the invention;

FIG. 36 is an exemplary sequence chart to show the operation of detecting fault occurrence in an IP telephone control card according to a fourth embodiment of the invention;

FIG. 37 is an exemplary sequence chart to show the operation of re-registering in a registration server RSV at the fault occurrence time according to the fourth embodiment of the invention;

FIG. 38 is an exemplary flowchart to show a control processing procedure between an IP telephone apparatus and a registration server at the fault occurrence time according to the fourth embodiment of the invention;

FIG. 39 is an exemplary flowchart to show a control processing procedure between the IP telephone apparatus and the registration server at the fault recovery time according to the fourth embodiment of the invention;

FIG. 40 is an exemplary drawing to show the schematic configuration of an IP telephone system according to a fifth embodiment of the invention;

FIG. 41 is an exemplary sequence chart to show the operation of detecting fault occurrence in an IP telephone control card according to the fifth embodiment of the invention;

FIG. 42 is an exemplary sequence chart to show the operation of sending connection ID to an IP network at the fault occurrence time according to the fifth embodiment of the invention;

FIG. 43 is an exemplary flowchart to show a control processing procedure between an IP telephone apparatus and the IP network at the fault occurrence time according to the fifth embodiment of the invention;

FIG. 44 is an exemplary flowchart to show a control processing procedure between the IP telephone apparatus and the IP network at the fault recovery time according to the fifth embodiment of the invention;

FIG. 45 is an exemplary drawing to show the schematic configuration of an IP telephone system according to a sixth embodiment of the invention;

FIG. 46 is an exemplary sequence chart to show the operation of detecting fault occurrence in an IP telephone control card according to the sixth embodiment of the invention;

FIG. 47 is an exemplary sequence chart to show the operation of sending connection ID to an IP network at the fault occurrence time according to the sixth embodiment of the invention;

FIG. 48 is an exemplary flowchart to show a control processing procedure between an IP telephone apparatus and the IP network at the fault occurrence time according to the sixth embodiment of the invention;

FIG. 49 is an exemplary flowchart to show a control processing procedure between the IP telephone apparatus and the IP network at the fault recovery time according to the sixth embodiment of the invention;

FIG. 50 is an exemplary drawing to show the schematic configuration of an IP telephone system according to a seventh embodiment of the invention;

FIG. 51 is an exemplary sequence chart to show the operation of detecting fault occurrence in an Internet provider according to the seventh embodiment of the invention;

FIG. 52 is an exemplary sequence chart to show the operation of re-registering in a registration server at the fault occurrence time according to the seventh embodiment of the invention;

FIG. 53 is an exemplary flowchart to show a control processing procedure among IP telephone apparatus and the registration server at the fault occurrence time according to the seventh embodiment of the invention;

FIG. 54 is an exemplary flowchart to show the control processing procedure among the IP telephone apparatus and the registration server at the fault occurrence time according to the seventh embodiment of the invention;

FIG. 55 is an exemplary flowchart to show a control processing procedure among the IP telephone apparatus and the registration server at the fault recovery time according to the seventh embodiment of the invention;

FIG. 56 is an exemplary flowchart to show the control processing procedure among the IP telephone apparatus and the registration server at the fault recovery time according to the seventh embodiment of the invention; and

FIG. 57 is an exemplary drawing to show an example of a line list used with the fourth to seventh embodiments of the invention.

### DETAILED DESCRIPTION

Various embodiments according to the invention will be described hereinafter with reference to the accompanying drawings. In general, according to one embodiment of the invention, an IP telephone system that enables a first telephone terminal and a second telephone terminal to communicate with each other using an internet protocol, includes: a detection unit that, when the first and second telephone terminals communicate with each other through a first communication route, detects a communication fault in a communication between the first and second telephone terminals; and a controller that switches a communication route from the first communication route to a second communication route different from the first communication route.

### First embodiment

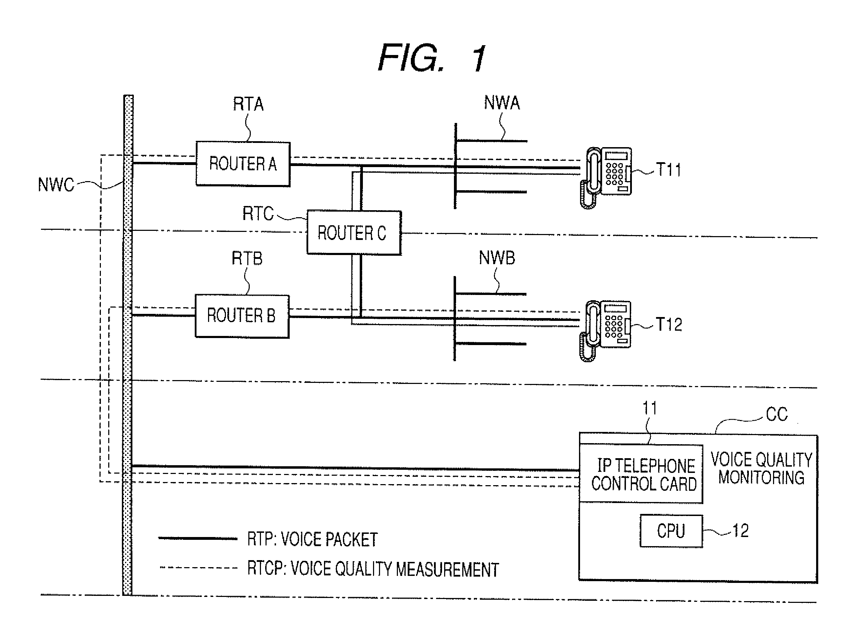

FIG. 1 is an exemplary drawing to show the schematic configuration of an IP telephone system according to a first embodiment of the invention. CC denotes a telephone calling center, NWA, NWB, and NWC denote IP packet transmission networks, and RTA, RTB, and RTC denote routers.

An IP telephone terminal (terminal A) T11 is connected to the network NWA and an IP telephone terminal (terminal B) T12 is connected to the network NWB. That is, the IP telephone terminal T11 is connected through the router RTA to the network NWC and is further connected through the network NWC to the calling center CC. The IP telephone terminal T12 is connected through the router RTB to the network NWC and is further connected through the network NWC to the calling center CC. Further, the networks NWA and NWB are connected by the router RTC.

The calling center CC includes an IP telephone control card 11 and a CPU 12. The network NWC is connected to the IP telephone control card 11 for performing the interface operation of originating and terminating processing, etc., for the IP telephone terminals T11 and T12. The IP telephone control card 11 transfers various pieces of control information involved in the interface operation with the IP telephone terminals T11 and T12 to and from the CPU 12.

The CPU 12 includes a fault switching control function in addition to a control function to implement the operation as the calling center CC. The fault switching control function monitors fault occurrence while communication are being conducted between the IP telephone terminals T11 and T12. Upon detection of a fault, the fault switching control function switches the communication route where the fault occurred, namely, the communication route through the router RTC to the communication route through the routers RTA and RTB.

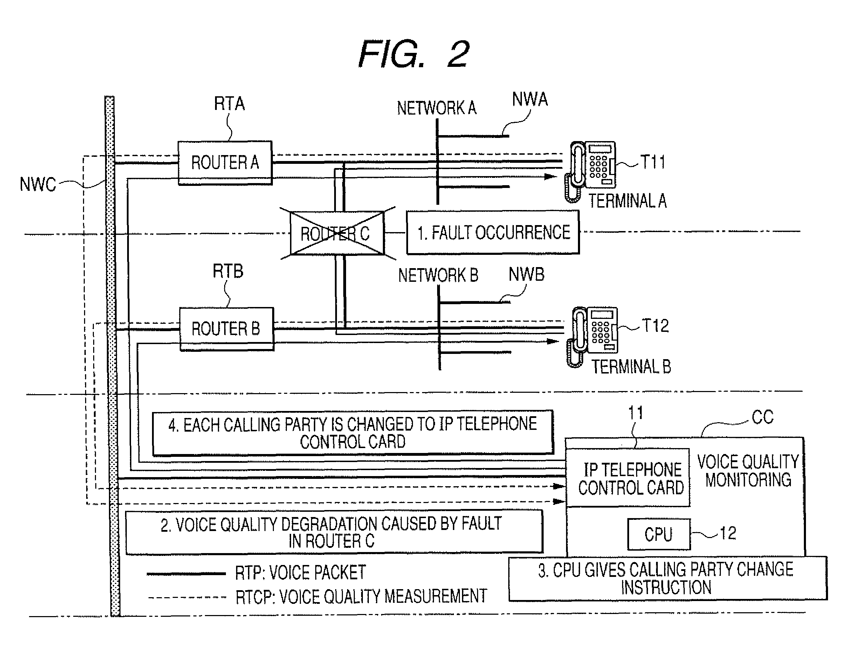

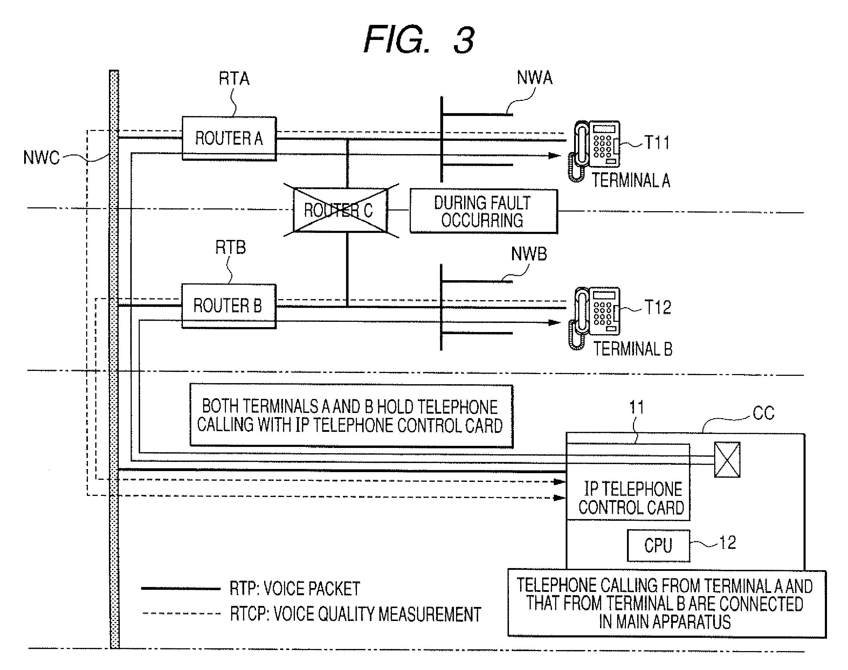

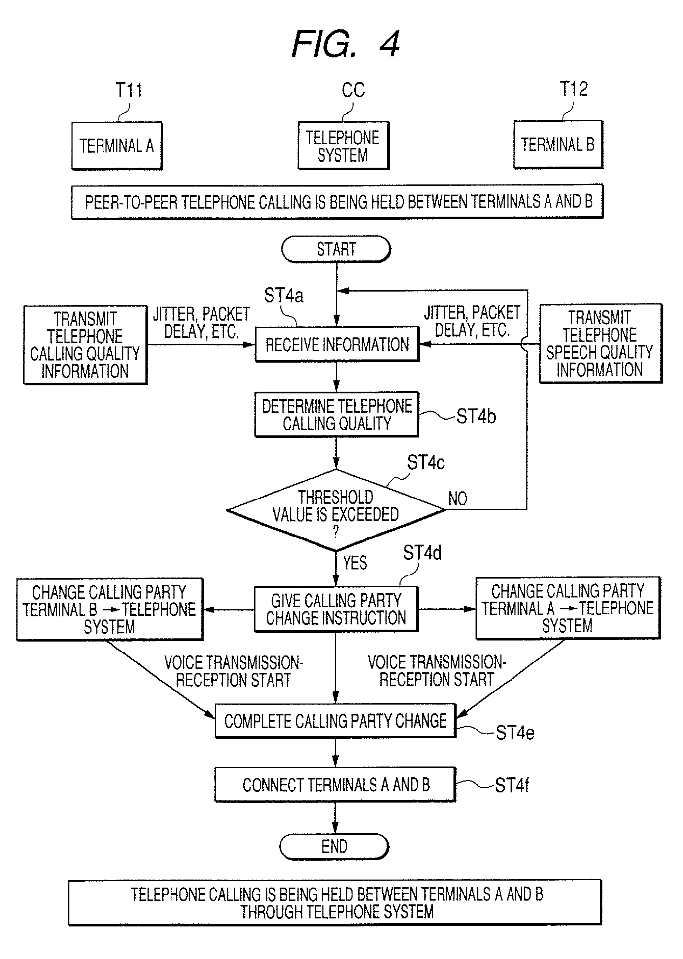

The operation of the described system is as follows: FIG. 2 is an exemplary sequence chart to show the operation of detecting fault occurrence in the router RTC, FIG. 3 is an exemplary sequence chart to show the operation of switching the communication route at the fault occurrence time, and FIG. 4 is an exemplary flowchart to show a control processing procedure of the calling center CC at the fault occurrence time.

It is assumed that telephone calling is held between the IP telephone terminals T11 and T12.

Each of the IP telephone terminals T11 and T12 measures the telephone speech quality of jitter, packet delay, packet loss, etc., as shown in FIG. 2 and sends a notification to the calling center CC at all times or if a preset threshold value is exceeded.

The CPU 12 of the calling center CC sees the value (step ST4a) and determines the telephone speech quality (step ST4b) and if the CPU 12 determines that some problem occurs on the network, it makes a transition from step ST4c to step ST4d. At step ST4d, the CPU 12 changes the voice packet destinations of the IP telephone terminals T11 and T12 from the IP telephone terminals T11 and T12 to the IP telephone control card 11, whereby the CPU 12 makes a transition from step ST4e to step ST4f. At step ST4f, the CPU 12 switches the peer-to-peer telephone calling to telephone calling through the calling center CC for continuing the telephone calling.

Therefore, according to the first embodiment described above, if a problem occurs in the router RTA, RTB, or RTC or the relay network, the telephone calling can also be continued.

### Second embodiment

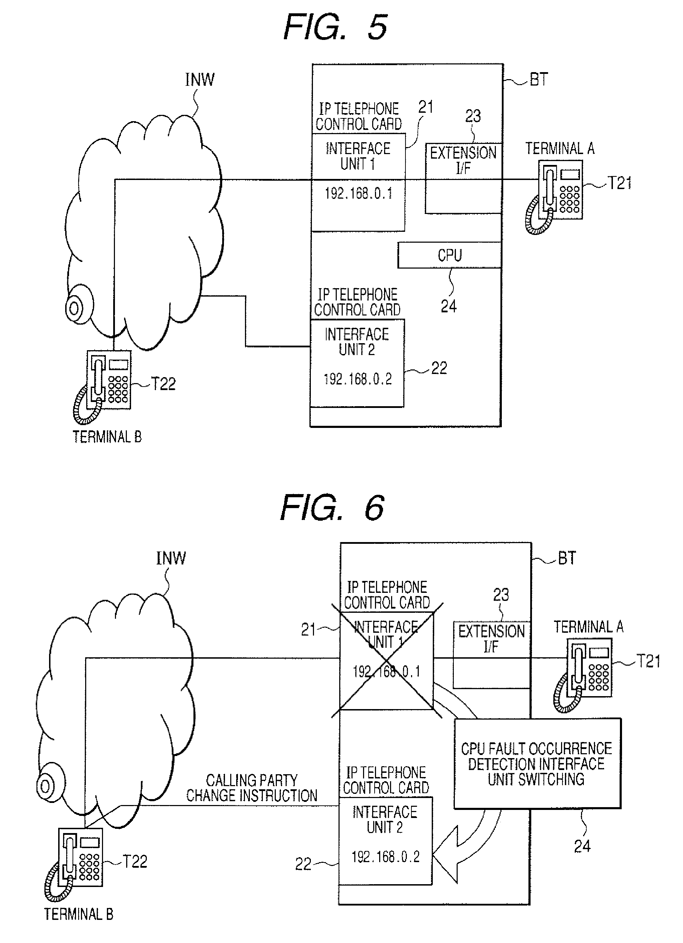

FIG. 5 is an exemplary drawing to show the schematic configuration of an IP telephone system in a second embodiment of the invention; BT denotes an IP telephone apparatus.

An IP network INW is connected to the IP telephone apparatus BT. The IP telephone apparatus BT includes IP telephone control card interface units 21 and 22, an extension interface unit 23, and a CPU 24.

The IP telephone control card interface units 21 and 22 perform interface processing with the IP network INW.

An IP telephone terminal T21 is connected to the extension interface unit 23. The extension interface unit 23 performs the interface operation of originating and terminating processing, etc., for the IP telephone terminal T21. The extension interface unit 23 transfers various pieces of control information involved in the interface operation with the IP telephone terminal T21 to and from the CPU 24.

The CPU 24 includes a fault switching control function in addition to a control function to implement the operation as the IP telephone apparatus BT. The fault switching control function monitors fault occurrence while communication are being conducted between the IP telephone terminal T21 and an IP telephone terminal T22. Upon detection of a fault, the fault switching control function switches the communication route where the fault occurred, namely, the communication route of the IP telephone control card interface unit 21 to the communication route through the IP telephone control card interface unit 22.

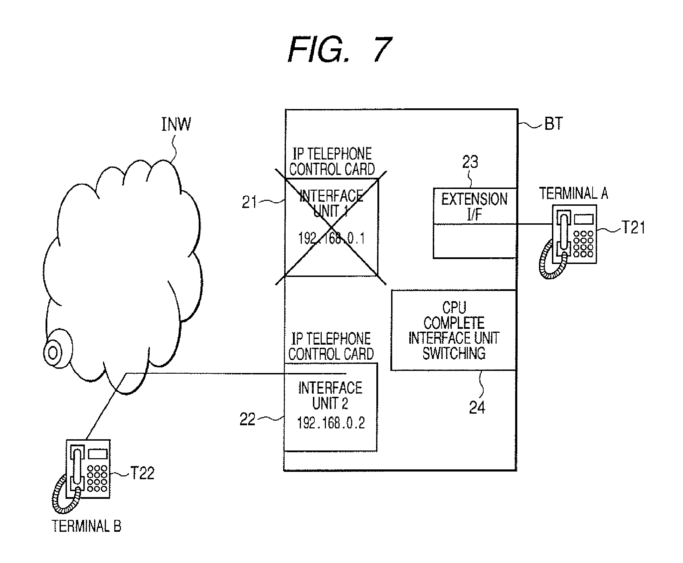

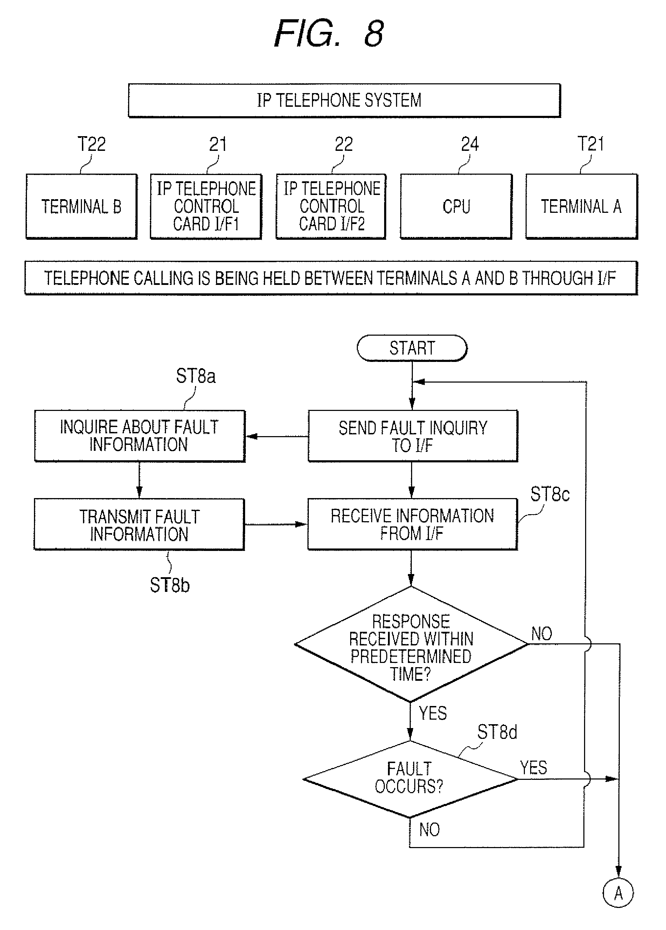

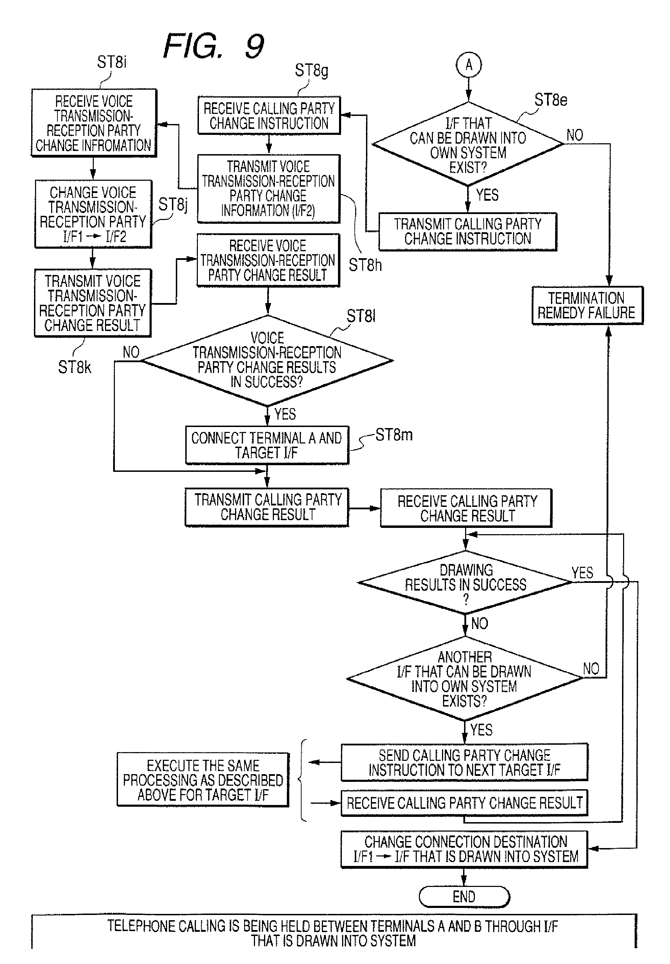

The operation of the described system is as follows: FIG. 6 is an exemplary sequence chart to show the operation of detecting fault occurrence in the IP telephone control card interface unit 21, FIG. 7 is an exemplary sequence chart to show the operation of switching the communication route at the fault occurrence time, and FIGS. 8 and 9 are exemplary flowcharts to show a control processing procedure among the CPU 24 and the IP telephone control card interface units 21 and 22 of the IP telephone apparatus BT and the IP telephone terminals T21 and T22 at the fault occurrence time.

It is assumed that telephone calling is held between the IP telephone terminals T21 and T22 through the IP telephone control card interface unit (I/F1) 21.

In this state, in the CPU 24 of the IP telephone apparatus BT, fault monitoring of the IP telephone control card interface unit 21 which is conducting communication is executed. As a technique of fault monitoring, a monitor signal is periodically transmitted to the communicating IP telephone control card interface unit 21 and whether or not a response signal returned by the IP telephone control card interface unit 21 to the monitor signal is received is checked.

If the IP telephone control card interface unit 21 detects a fault or if a fault occurs in the IP telephone control card interface unit 21 (step ST8a), fault information is sent to the CPU 24 (steps ST8b and ST8c).

When the CPU 24 of the IP telephone apparatus BT detects the fault, it makes a transition from step ST8b to step ST8e and checks whether or not the IP telephone apparatus BT contains another IP telephone control card interface unit having the same function.

If a fault does not occurs in the IP telephone apparatus BT and IP telephone control card interface unit 22 with an available port exists, the CPU 24 makes a transition from step ST8f to step ST8h and sends an instruction of transmitting a voice packet to the IP telephone control card interface unit 22 from the IP telephone control card interface unit 22 to the IP telephone terminal T22.

Upon reception of the voice transmission-reception party change (step ST8i), the IP telephone terminal T22 switches the voice transmission-reception party (step ST8j) and transmits the result to the IP telephone control card interface unit 22 (step ST8k).

If the voice transmission-reception party change of the IP telephone terminal T22 results in success, the IP telephone control card interface unit 22 makes a transition from step ST81 to step ST8m and internally connects the IP telephone control card interface unit 22 and the IP telephone terminal T21. Accordingly, the telephone calling can be continued.

As described above, according to the second embodiment, if the communicating IP telephone control card interface unit 21 fails or if a problem occurs in the LAN cable connected to the IP telephone control card interface unit 21 or the following hub, the telephone calling can be continued.

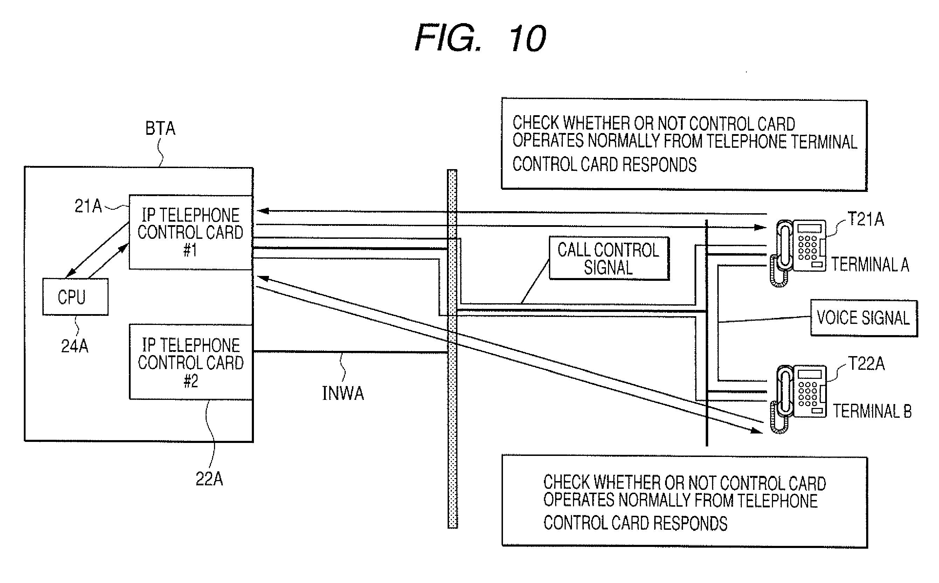

FIGS. 10 to 14 are exemplary sequence charts to show the switching operation at the fault occurrence time as a first modified example of the second embodiment.

In FIG. 10, IP telephone terminals T21A and T22A are connected to an IP telephone apparatus BTA through an IP network INWA.

Each of the IP telephone terminals T21A and T22A periodically checks whether or not an IP telephone control card 21A to which the terminal is connected operates normally. If the IP telephone control card 21A operates normally, it returns a response indicating the normal operation to the requesting terminals T21A and T22A.

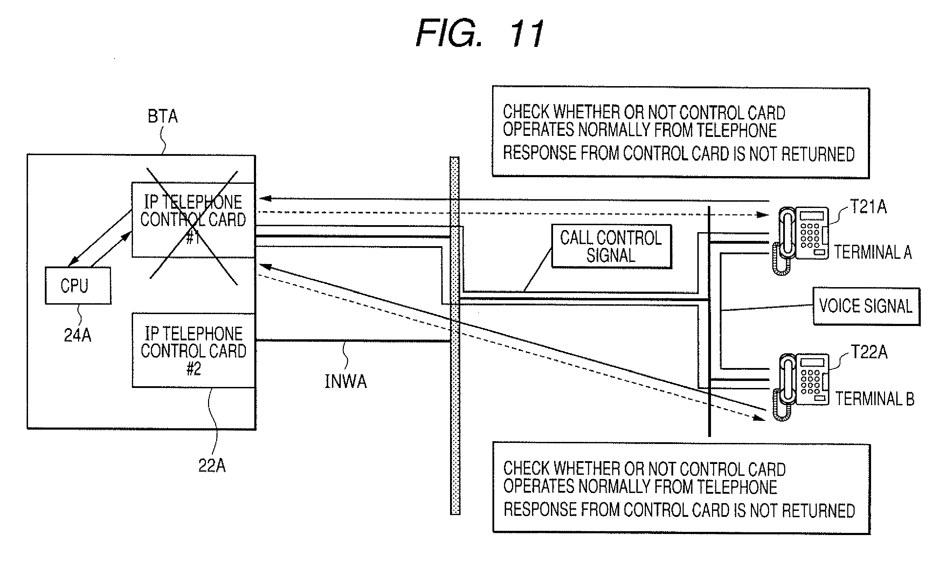

If the IP telephone control card 21A or the IP telephone apparatus BTA fails or if some fault occurs on the connection path to the machines, the IP telephone terminals T21A and T22A receive a response indicating the abnormal operation from the IP telephone control card 21A or a response from the IP telephone control card 21A is not returned to the IP telephone terminal T21A or T22A, as shown in FIG. 11.

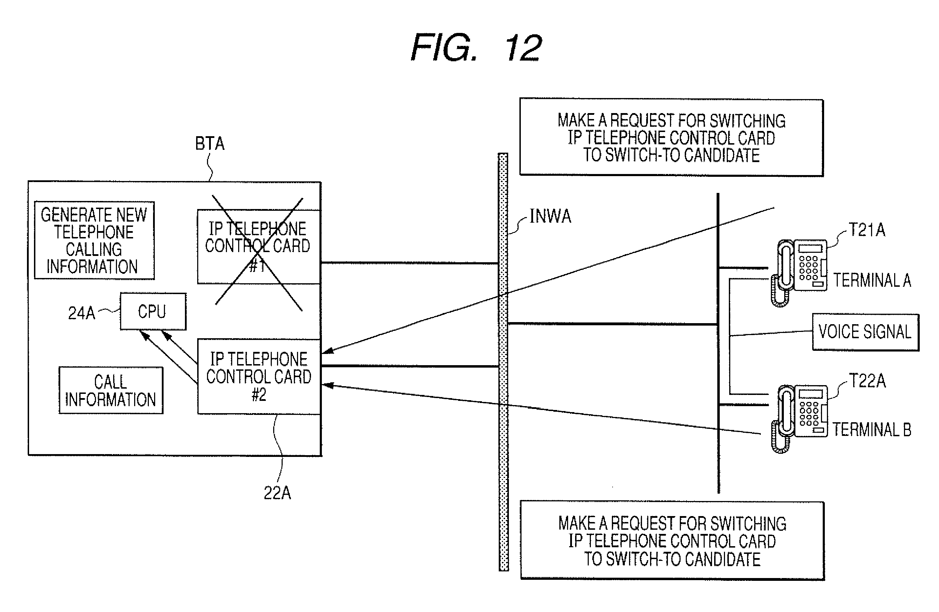

Each of the IP telephone terminals T21A and T22A has a switch-to candidate list predetermined according to any of procedures described below and changes the card to which the terminal is connected in accordance with the list as shown in FIG. 12 when abnormal operation is detected or no response is made:

(1) Switch-to candidate list fixedly set in the telephone

(2) Switch-to candidate list generated as the IP telephone control card periodically notifies the terminal on the network that an available port exists and the terminal records the notification.

(3) Switch-to candidate list generated as the IP telephone control card periodically notifies the terminal on the network that an available port exists and the terminal receiving the notification sends a request for reserving the available port to the IP telephone control card and only the card with the port whose reservation results in success is extracted.

(4) Switch-to candidate list recording the IP telephone control cards used in the past as telephone calling parties.

(5) Switch-to candidate list generaetd as a call control signal of another terminal is captured and the IP telephone control card as the destination or the source is recorded.

At the time, the IP telephone terminal T21A making a switch request sends the telephone state such as idle, call originating, call terminating, ringing, or telephone calling and party information if the called party or the associated party is already determined to IP telephone control card 22A to which the switch request is applied. The IP telephone control card 22A generates new call control information from the received call state and party information for making it possible to perform telephone control and also notifies the IP telephone terminal T21A making the switch request that the switching results in success.

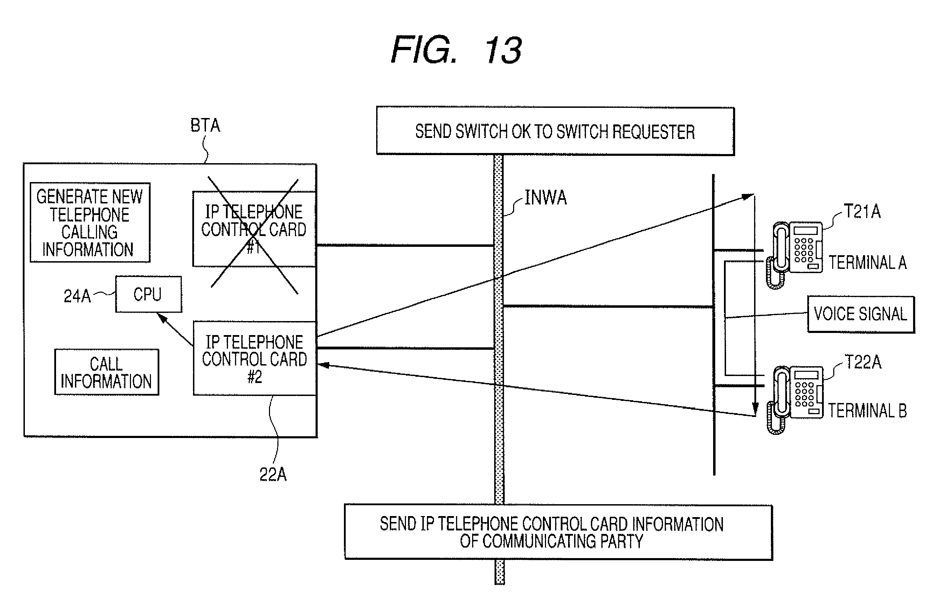

If the switching results in success and party information exists, the IP telephone terminal T21A transmits switch-to IP telephone control card information to the associated terminal. Upon reception of the switch-to IP telephone control card information, the IP telephone terminal T22A transmits the IP telephone control card information of the associated party to the IP telephone control card to which the terminal is connected if the IP telephone control card to which the terminal is connected is determined, as shown in FIG. 13.

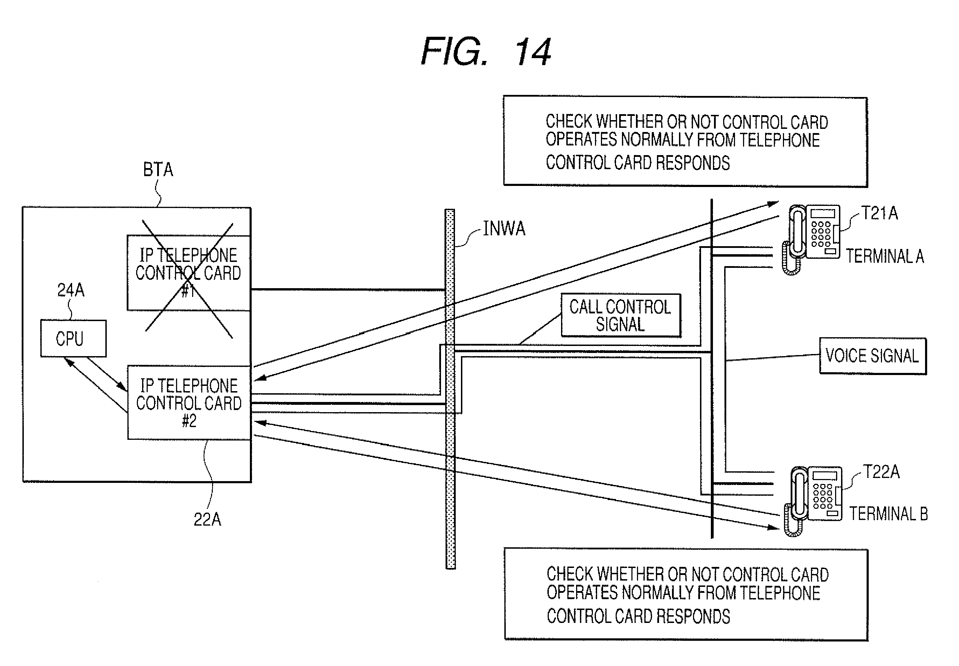

Upon completion of the processing, the IP telephone terminals T21A and T22A start to check whether or not the switch-to IP telephone control card operates normally, as shown in FIG. 14.

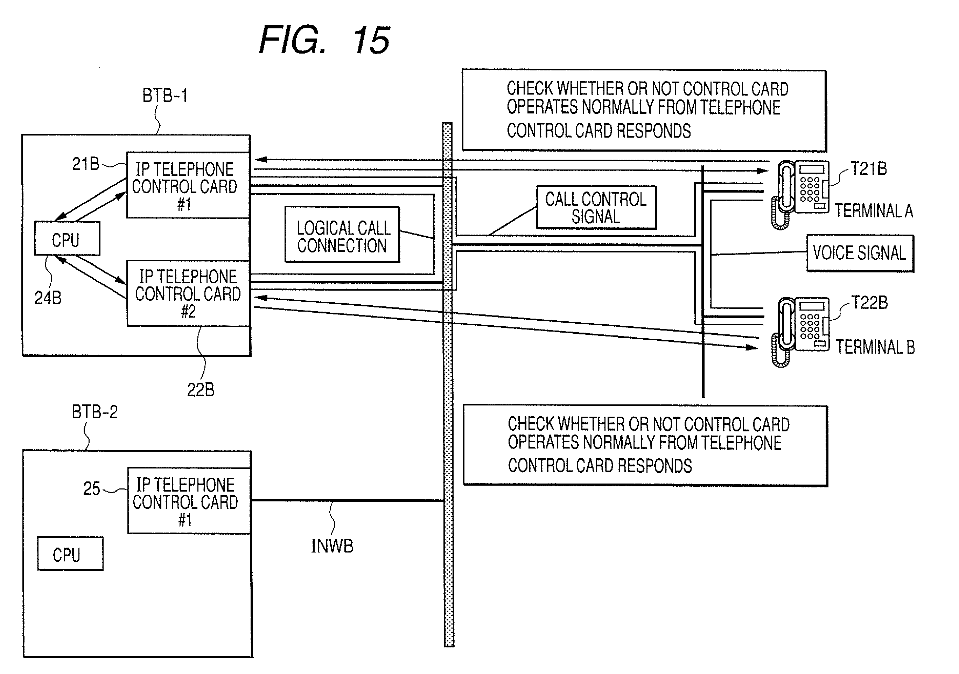

FIGS. 15 to 19 are exemplary sequence charts to show the switching operation at the fault occurrence time as a second modified example of the second embodiment.

In FIG. 15, IP telephone terminals T21B and T22B are connected to an IP telephone apparatus BTB-1 through an IP network INWB. Further, an IP telephone apparatus BTB-2 is connected through the IP network INWB.

The IP telephone terminals T21B and T22B periodically check whether or not IP telephone control cards 21B and 22B to which the terminals are connected operate normally. If the IP telephone control cards 21B and 22B operate normally, they return a response indicating the normal operation to the requesting terminals T21B and T22B.

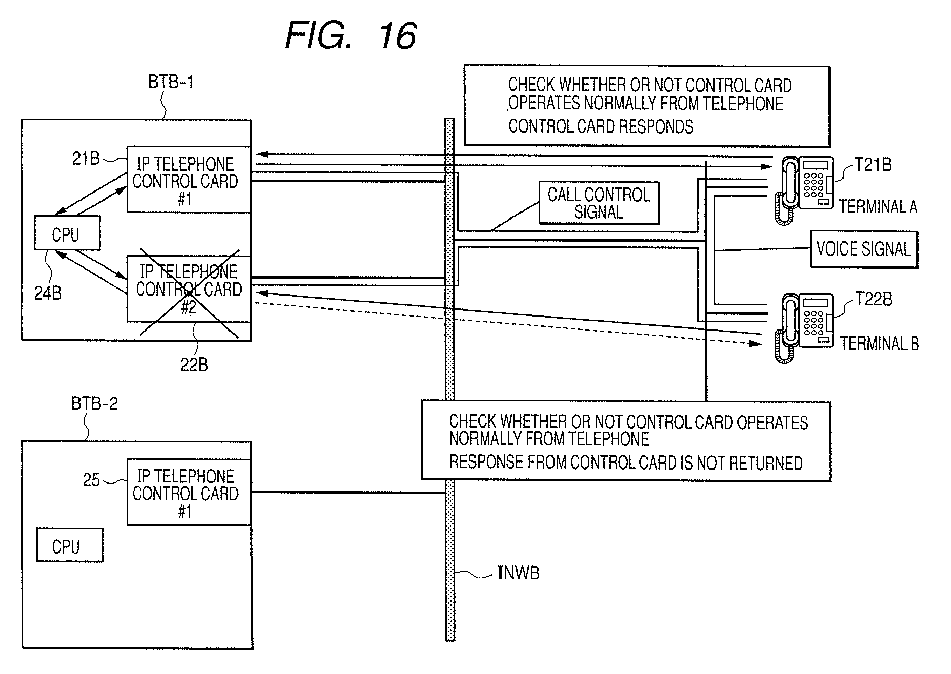

If a failure of the IP telephone control card 22B occurs, the IP telephone terminal T22B receives a response indicating the abnormal operation from the IP telephone control card 22B or a response from the IP telephone control card 22B is not returned to the IP telephone terminal T22B, as shown in FIG. 16.

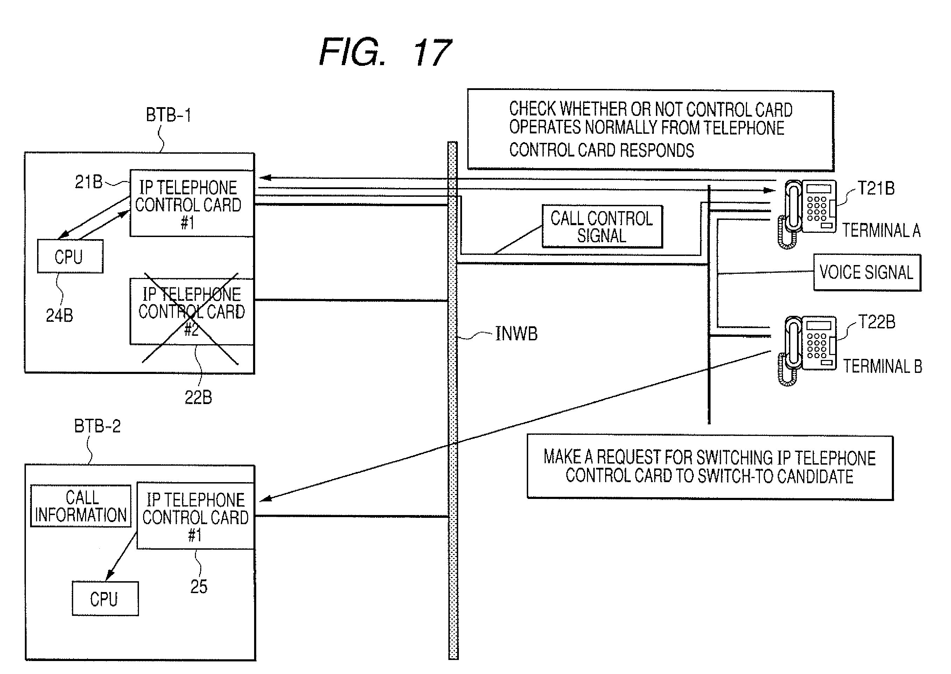

Each of the IP telephone terminals T21B and T22B has a switch-to candidate list predetermined according to any of the procedures (1) to (5) described above and changes the card to which the terminal is connected in accordance with the list as shown in FIG. 17 when abnormal operation is detected or no response is made.

At this time, the IP telephone terminal T22B making a switch request sends the telephone state such as idle, call originating, call terminating, ringing, or telephone calling and party information if the called party or the associated party is already determined to an IP telephone control card 25 of the IP telephone apparatus BTB-2 to which the switch request is applied. The IP telephone control card 25 generates new call control information from the received call state and party information for making it possible to perform telephone control and also notifies the IP telephone terminal T22B making the switch request that the switching results in success.

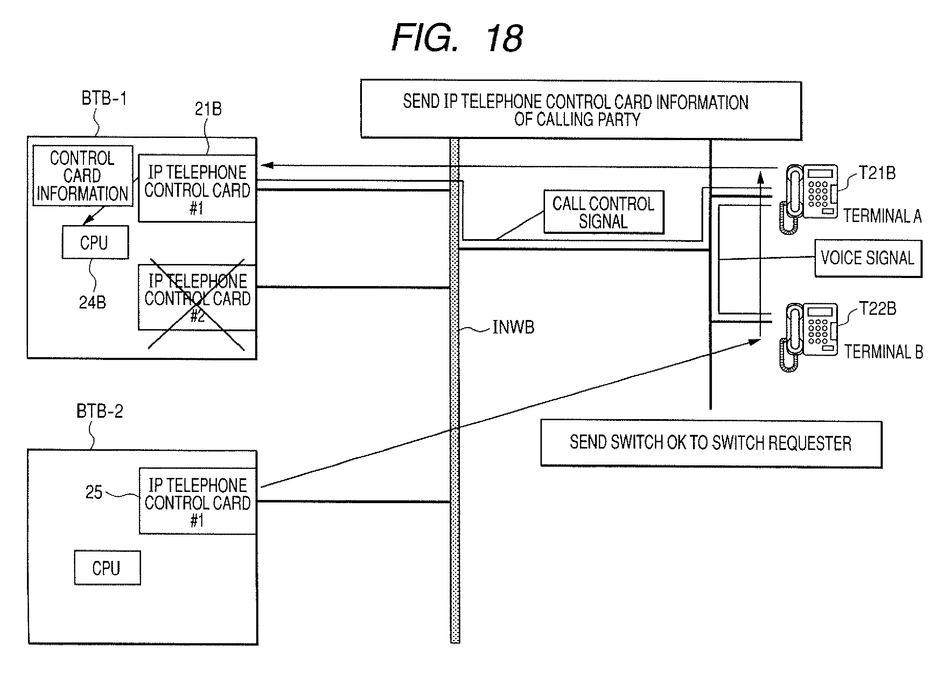

If the switching results in success and party information exists, the IP telephone terminal T22B transmits switch-to IP telephone control card information to the associated terminal T21B. Upon reception of the switch-to IP telephone control card information, the IP telephone terminal T21B transmits the IP telephone control card information of the associated party to the IP telephone control card 21B to which the terminal is connected if the IP telephone control card to which the terminal is connected is determined, as shown in FIG. 18.

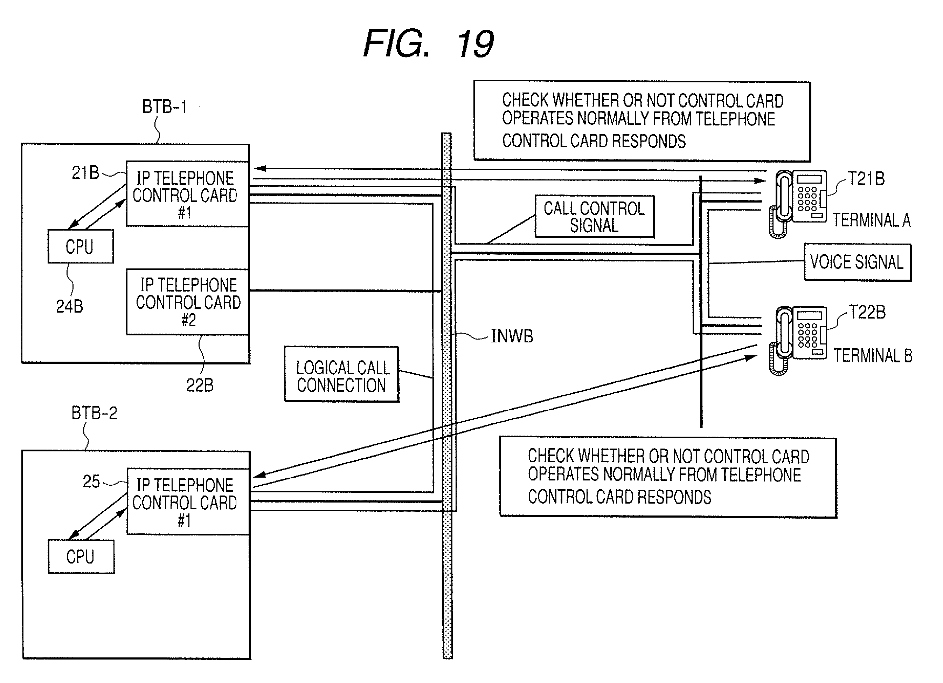

Upon completion of the processing, the IP telephone terminal T22B starts to check whether or not the switch-to IP telephone control card 25 operates normally, as shown in FIG. 19.

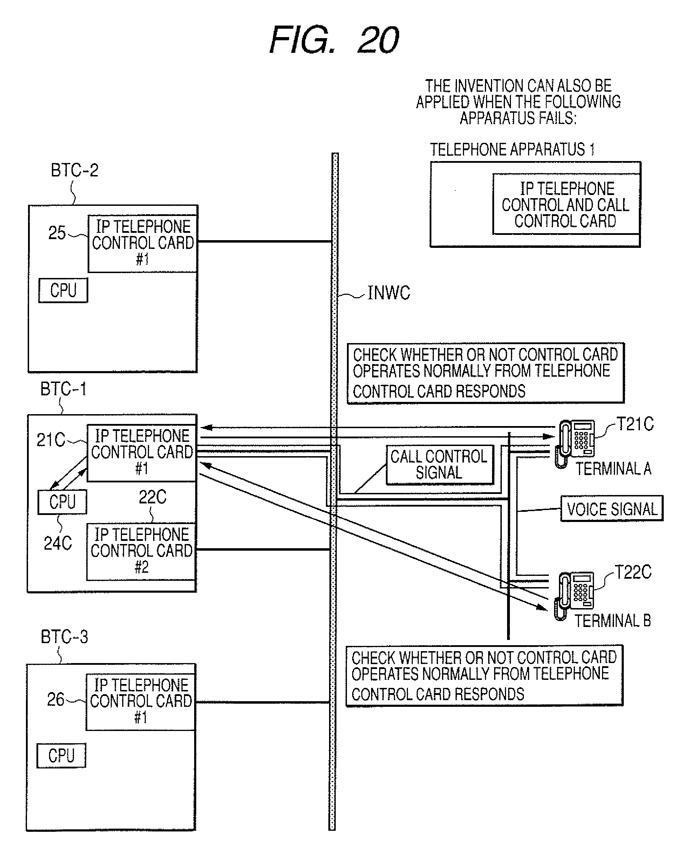

FIGS. 20 to 24 are exemplary sequence charts to show the switching operation at the fault occurrence time as a third modified example of the second embodiment.

In FIG. 20, IP telephone terminals T21C and T22C are connected to an IP telephone apparatus BTC-1 through an IP network INWC. Further, IP telephone apparatus BTC-2 and BTC-3 are connected through the IP network INWC.

The IP telephone terminals T21C and T22C periodically check whether or not an IP telephone control card 21C to which the terminals are connected operates normally. If the IP telephone control card 21C operates normally, it returns a response indicating the normal operation to the requesting terminals T21C and T22C.

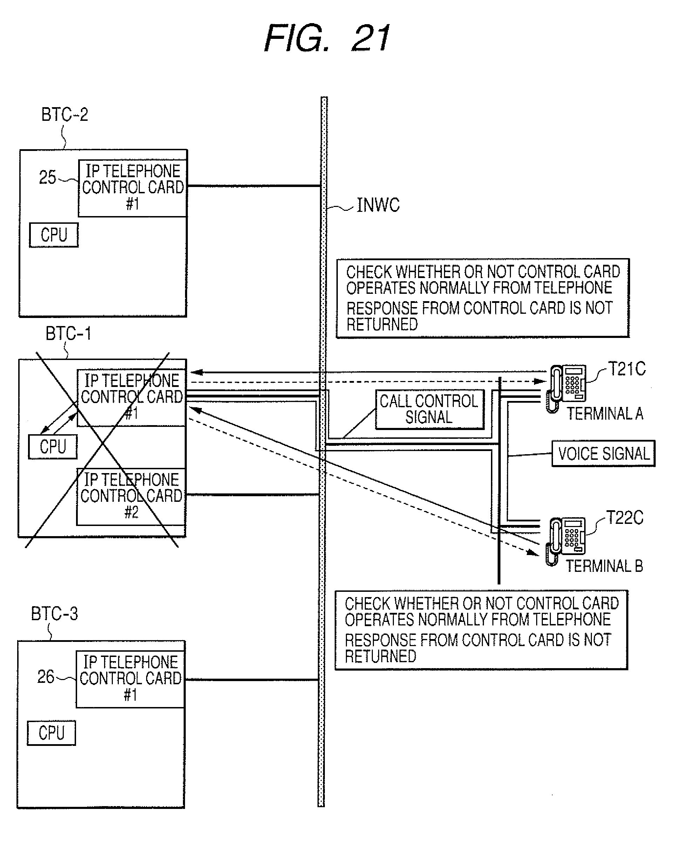

If a failure of the IP telephone apparatus BTC-1 occurs, the IP telephone terminals T21C and T22C receive a response indicating the abnormal operation from the IP telephone control card 21C or a response from the IP telephone control 21C is not returned to the IP telephone terminal T21C or T22C, as shown in FIG. 21.

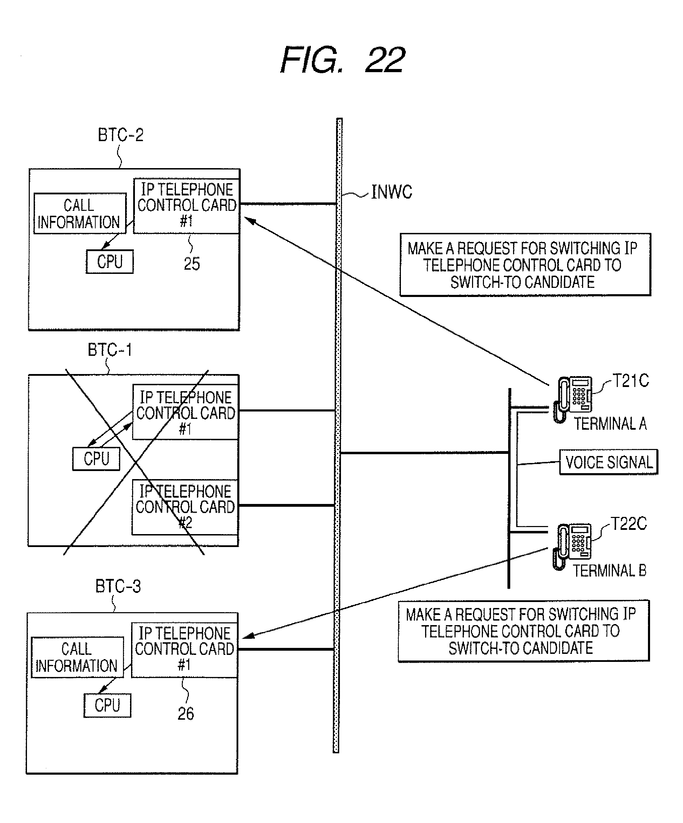

Each of the IP telephone terminals T21C and T22C has a switch-to candidate list predetermined according to any of the procedures (1) to (5) described above and changes the card to which the terminal is connected in accordance with the list as shown in FIG. 22 when abnormal operation is detected or no response is made.

At this time, the IP telephone terminals T21C and T22C making a switch request sends the telephone state such as idle, call originating, call terminating, ringing, or telephone calling and party information if the called party or the associated party is already determined to IP telephone control cards 25 and 26 of the IP telephone apparatus BTC-2 and BTC-3 to which the switch request is applied. The IP telephone control cards 25 and 26 generate new call control information from the received call state and party information for making it possible to perform telephone control and also notify the IP telephone terminals T21C and T22C making the switch request that the switching results in success.

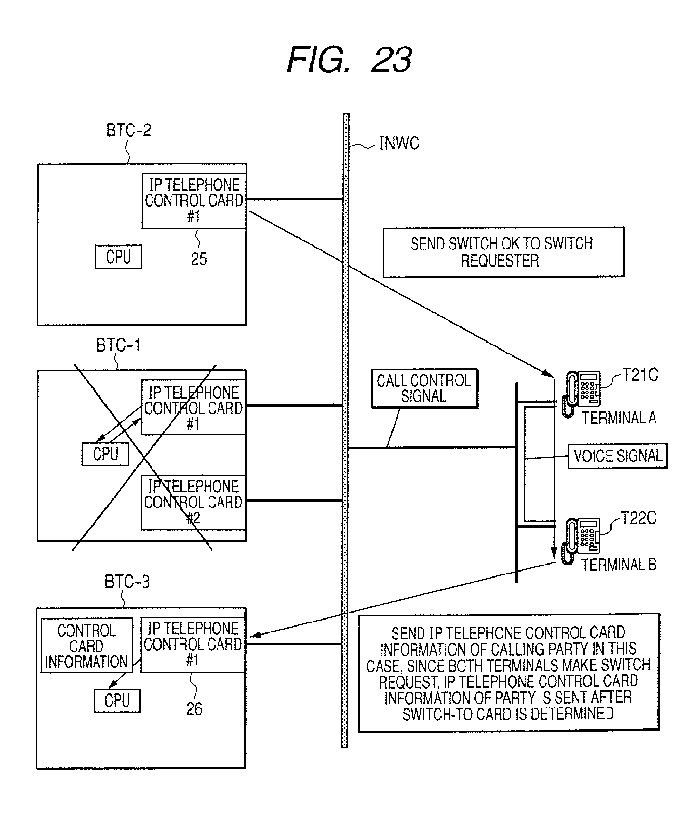

If the switching results in success and party information exists, the IP telephone terminals T21C and T22C transmit switch-to IP telephone control card information to the associated terminal. Upon reception of the switch-to IP telephone control card information, the IP telephone terminals T21C and T22C transmit the IP telephone control card information of the associated party to the IP telephone apparatus BTC-2 and BTC-3 to which the terminals are connected if the IP telephone control cards to which the terminals are connected are determined, as shown in FIG. 23.

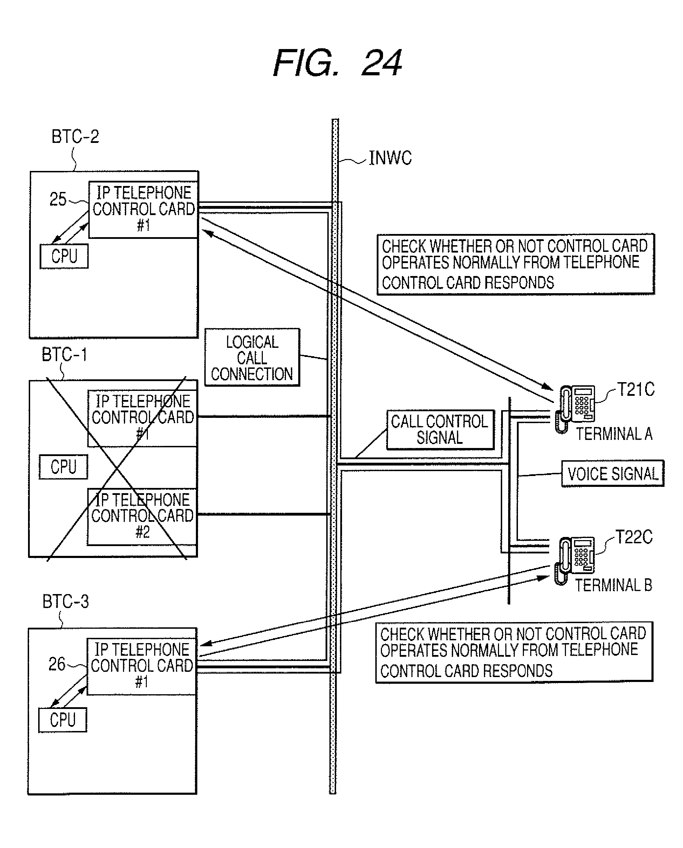

Upon completion of the processing, the IP telephone terminals T21C and T22C start to check whether or not the switch-to IP telephone control cards 25 and 26 operate normally, as shown in FIG. 24.

As described above, according to the first to third modified examples of the second embodiment, if a failure occurs in the IP telephone control card, the LAN cable connected to the IP telephone control card, the following hub, or the telephone apparatus accommodating the IP telephone control card, the call processing can also be continued.

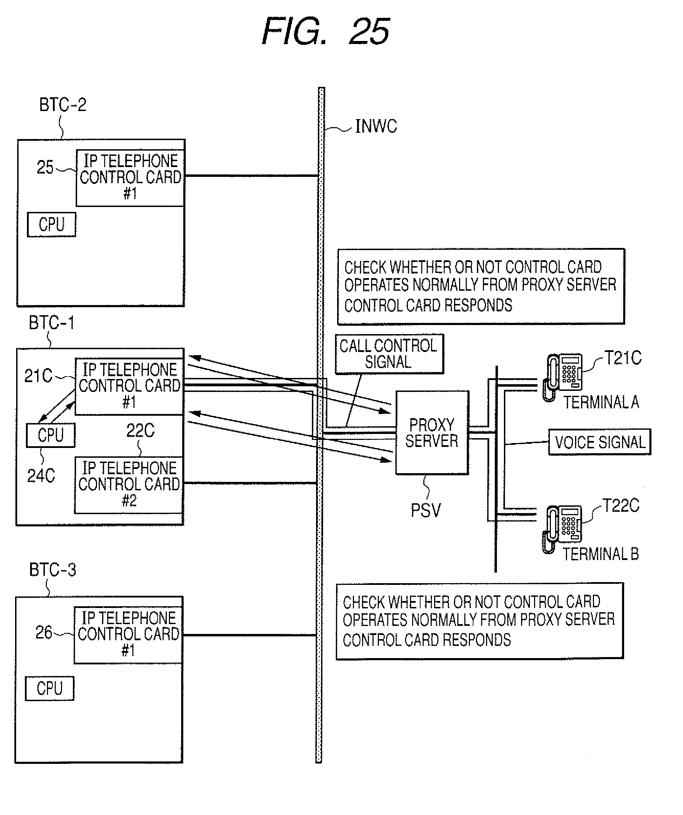

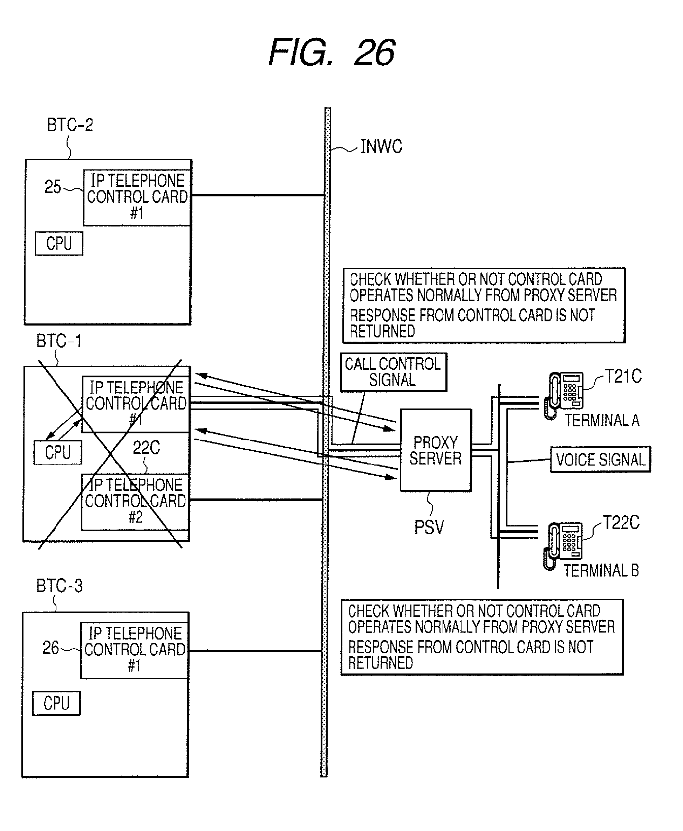

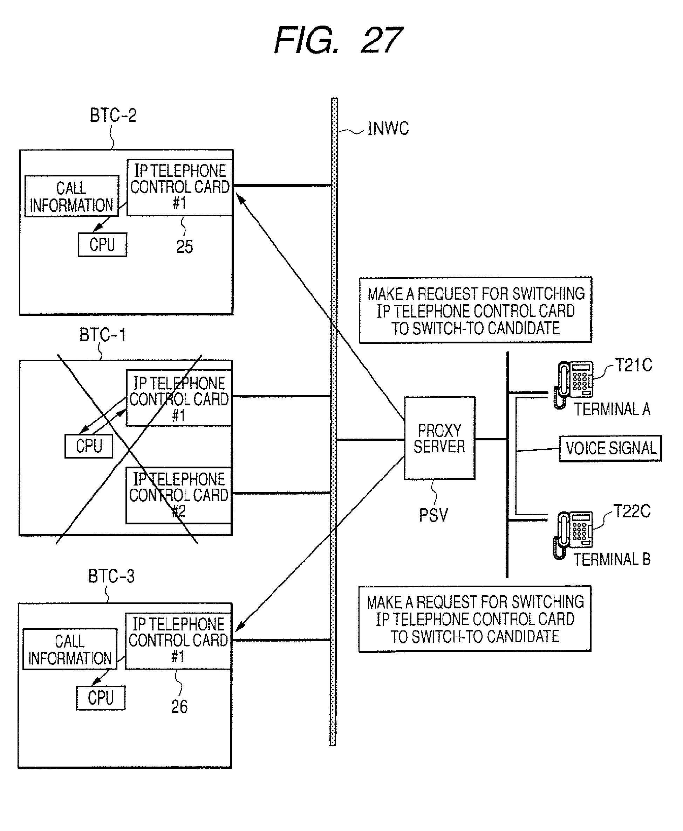

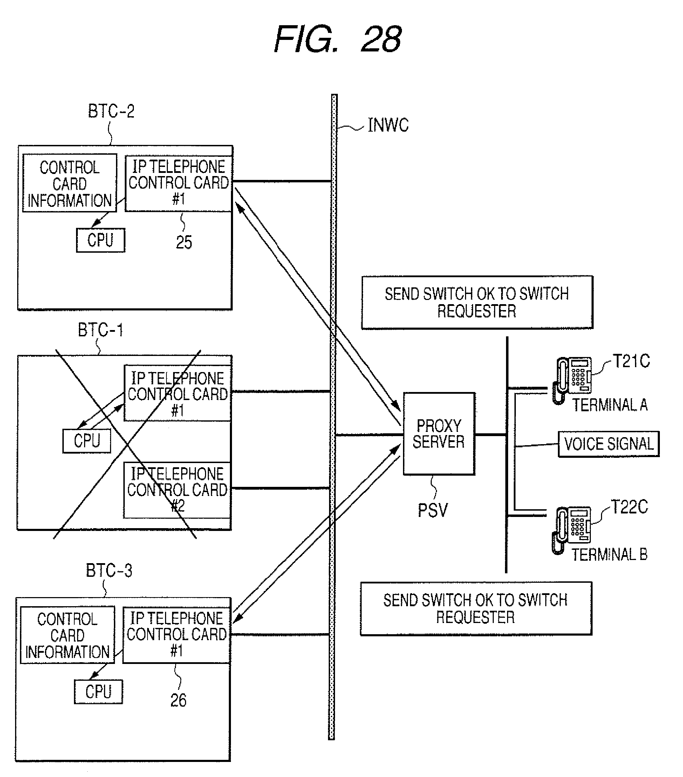

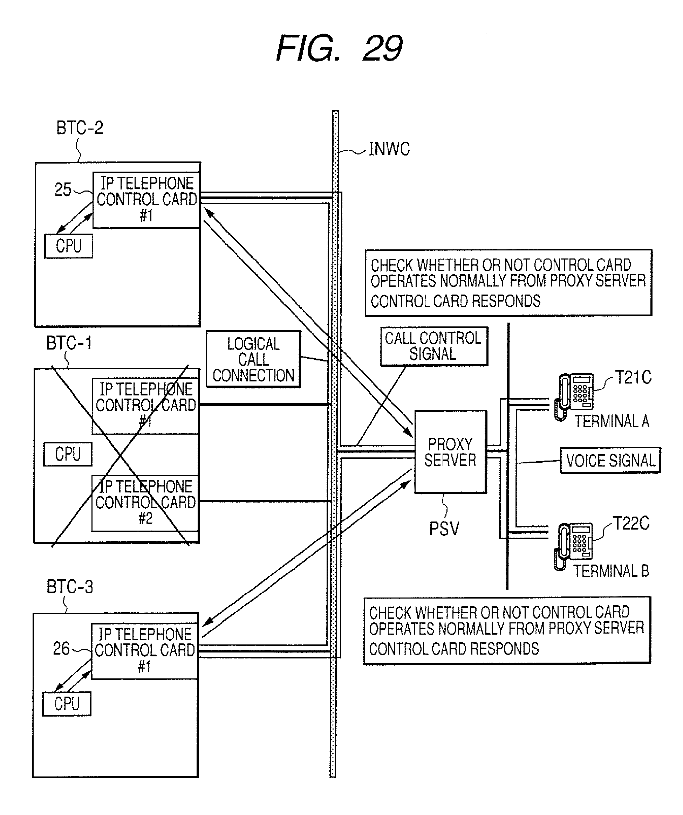

FIGS. 25 to 29 are exemplary sequence charts to show the switching operation at the fault occurrence time as a fourth modified example of the second embodiment. Parts identical with those previously described with reference to FIGS. 20 to 24 are denoted by the same reference numerals in FIGS. 25 to 29 and will not be discussed again in detail.

In the fourth modified example, a proxy server PSV rather than a telephone is provided with a monitor and accommodation switching function of an IP telephone control card. A procedure is the same as the procedures in the first to third modified examples. In an environment in which the proxy server PSV exists, the proxy server PSV collectively manages connection information and accommodation information of terminals and IP telephone control card information of the IP telephone control card to which each terminal is connected need not be sent to the associated party.

Although the drawings in the examples are made about the case where a failure occurs during telephone calling, the essence of the invention lies in the fact that the terminal state is sent to the switch-to machine and the state of the switch-to machine is matched with the terminal state, thereby making possible later service development; the invention can be applied not only to the state of telephone calling, but also to all other call states.

### Third embodiment

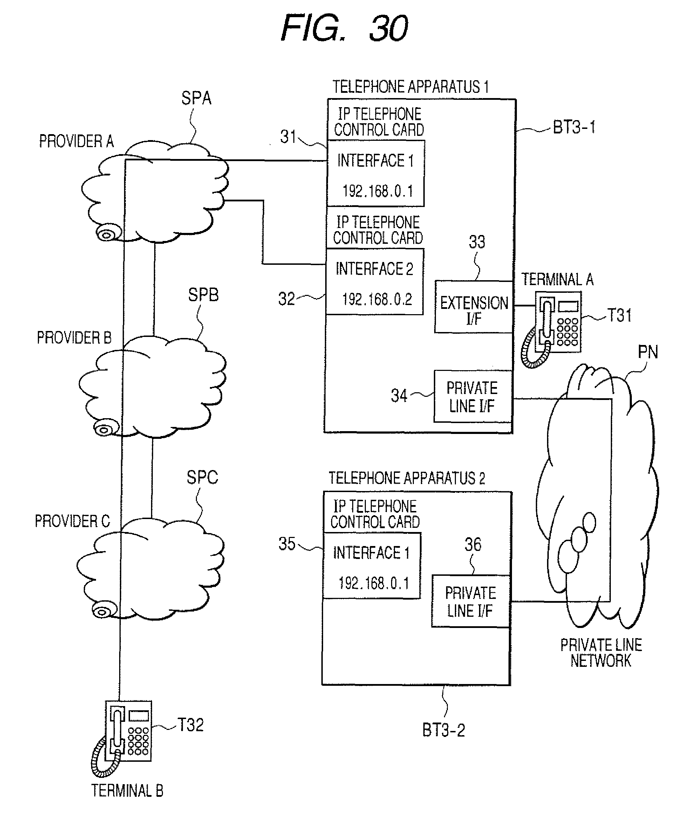

FIG. 30 is an exemplary drawing to show the schematic configuration of an IP telephone system in a third embodiment of the invention; BT3-1 and BT3-2 denote IP telephone apparatus.

The IP telephone apparatus BT3-1 and BT3-2 are connected through a private line network PN. Internet providers SPA, SPB, and SPC are connected to the IP telephone apparatus BT3-1 and BT3-2.

The IP telephone apparatus BT3-1 includes IP telephone control cards 31 and 32, an extension interface unit 33, and a private line interface unit 34. The IP telephone control cards 31 and 32 perform interface processing with the Internet provider SPA.

The extension interface unit 33 performs interface processing with an IP telephone terminal T31.

The private line interface unit 34 performs interface processing with the private line network PN.

The IP telephone apparatus BT3-2 includes an IP telephone control card 35 and a private line interface unit 36.

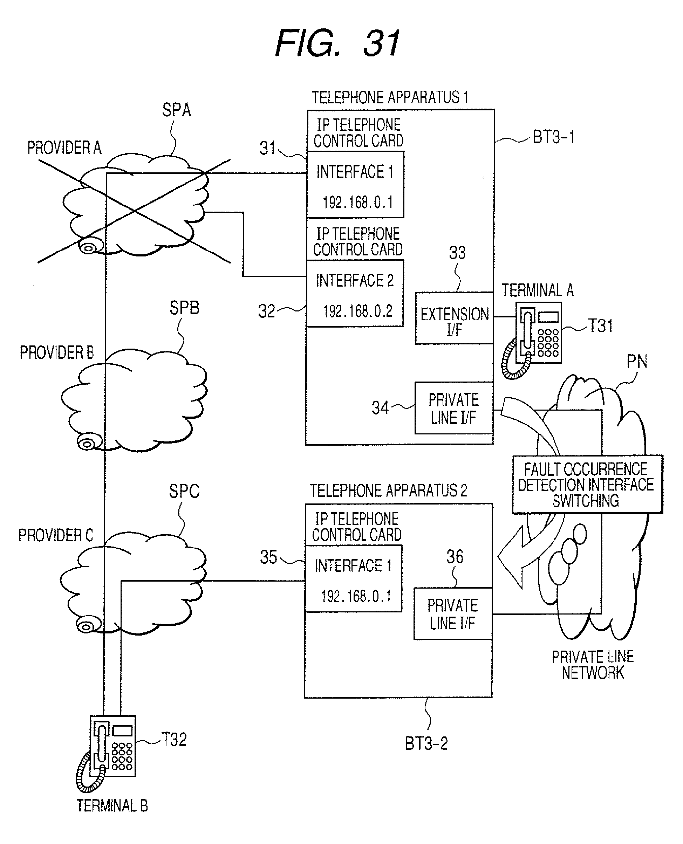

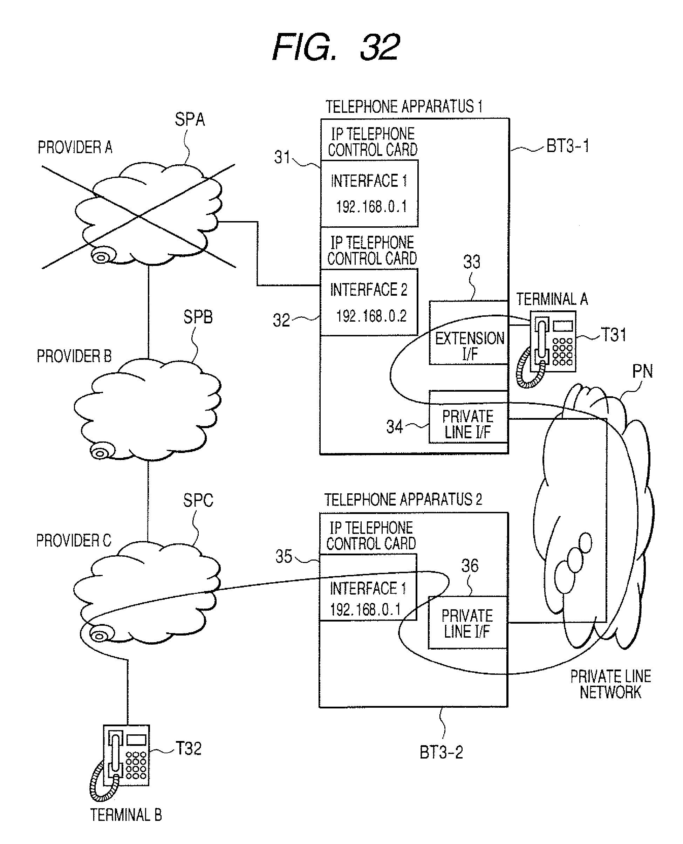

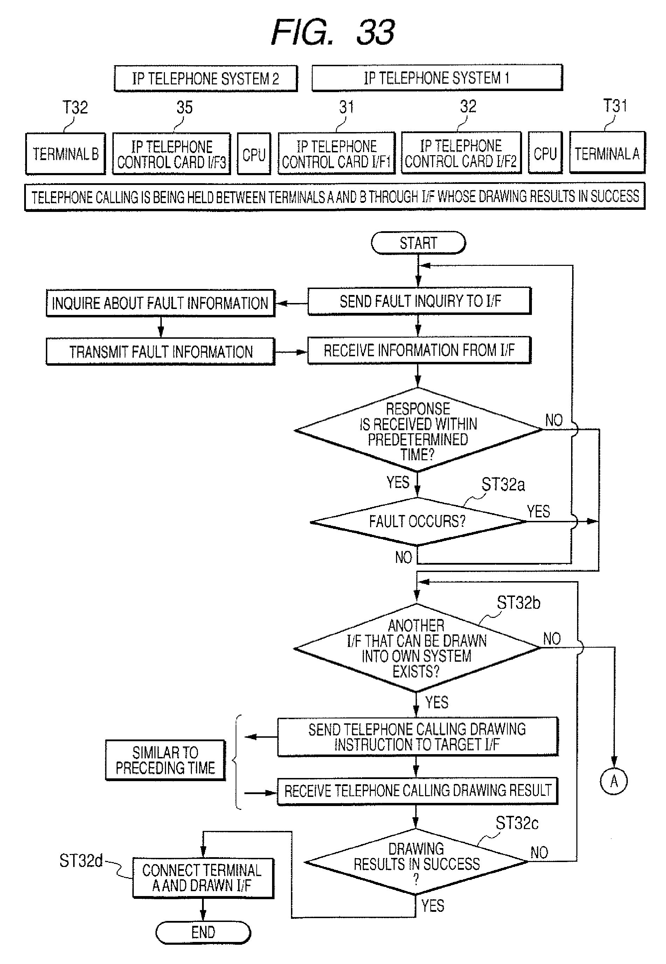

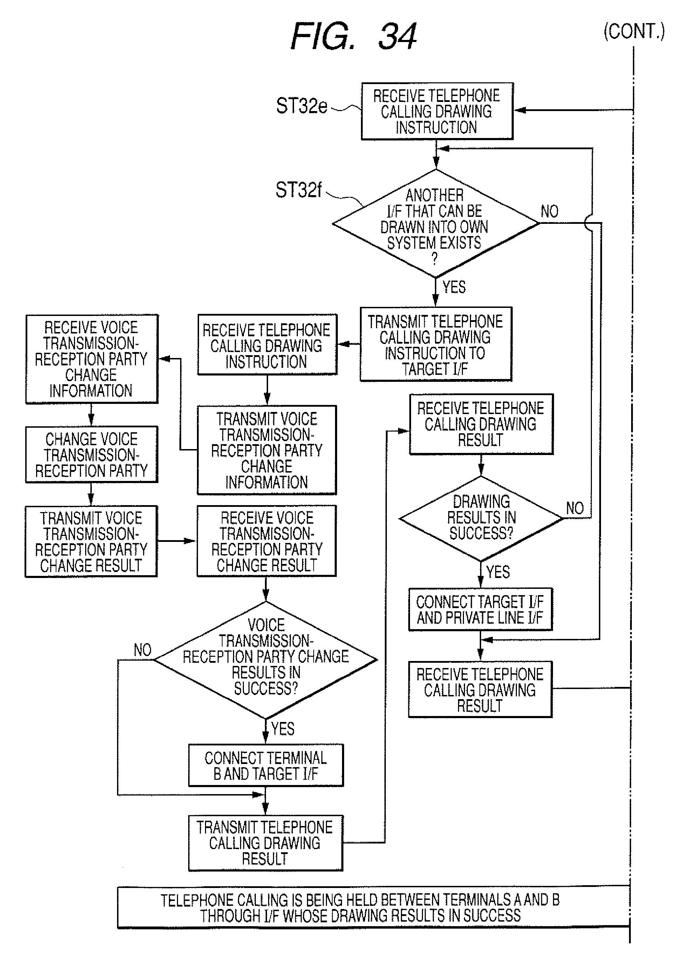

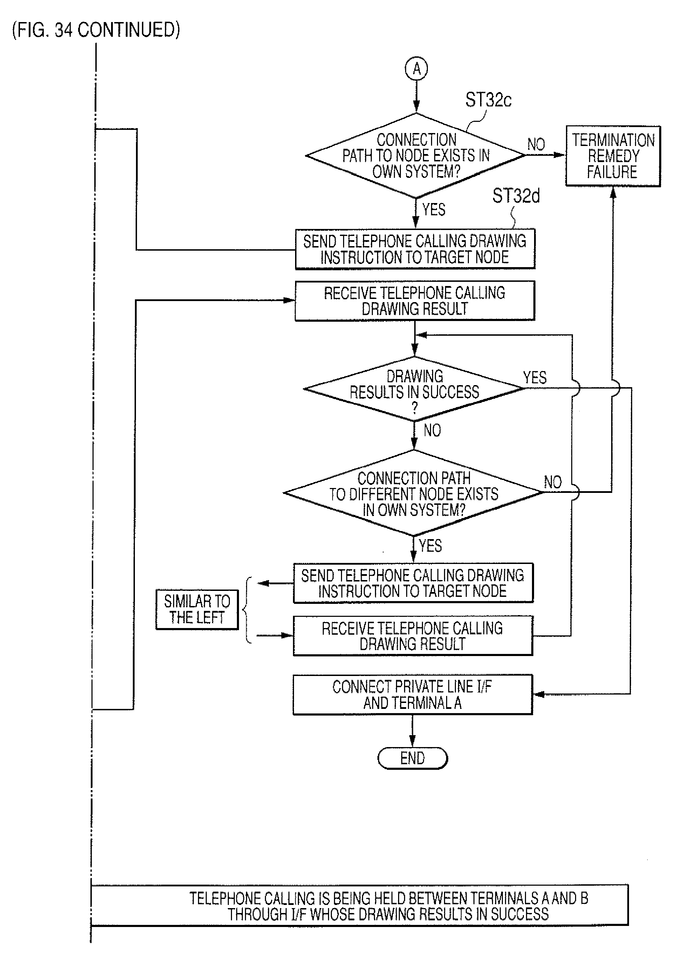

The operation of the described system is as follows: FIG. 31 is an exemplary sequence chart to show the operation of detecting fault occurrence in the Internet provider SPA, FIG. 32 is an exemplary sequence chart to show the operation of switching the communication route at the fault occurrence time, and FIGS. 33 and 34 are exemplary flowcharts to show a control processing procedure among the IP telephone apparatus BT3-1 and BT3-2 and the IP telephone terminal T31 and an IP telephone terminal T32 at the fault occurrence time.

It is assumed that the IP telephone terminal T32 is connected to the IP telephone terminal T31 through the Internet providers SPA, SPB, and SPC and the IP telephone control card 31. The IP telephone apparatus BT3-2 has an IP telephone control card 35 and is connected to the Internet provider SPC.

If the IP telephone control card 31 detects a fault or a fault occurs in the IP telephone control card 31, the IP telephone apparatus BT3-1 detects the fault and makes a transition from step ST32a to step ST32b and checks whether or not it contains another IP telephone control card having the same function.

If the IP telephone apparatus BT3-1 contains an IP telephone control card having the same function, it attempts to switch telephone calling according to a predetermined procedure. If the switching results in failure or the IP telephone apparatus BT3-1 does not contain any IP telephone control card having the same function, the IP telephone apparatus BT3-1 makes a transition from step ST32b to step ST32c and checks whether or not the IP telephone apparatus BT3-1 is connected to the IP telephone apparatus BT3-2.

If the IP telephone apparatus BT3-1 is connected to the IP telephone apparatus BT3-2, the IP telephone apparatus BT3-1 makes a transition from step ST32c to step ST32d and transmits telephone calling information of the IP telephone terminal T32 to the IP telephone apparatus BT3-2 through the private line network PN.

Upon reception of the telephone calling information of the IP telephone terminal T32, the IP telephone apparatus BT3-2 makes a transition from step ST32e to step ST32f and checks whether or not IP telephone control card exists. If IP telephone control card 35 exists, the IP telephone apparatus BT3-2 changes the voice transmission-reception party of the IP telephone terminal T32 to the IP telephone control card 35 according to the procedure described above and connects the IP telephone control card 35 and the private line network PN and transmits the result to the IP telephone apparatus BT3-1 as shown in FIG. 31.

If change of the voice transmission-reception party results in success, the IP telephone apparatus BT3-1 connects the private line network PN and the IP telephone terminal T31 as shown in FIG. 32. Accordingly, telephone calling can be continued between the IP telephone terminals T31 and T32 through the IP telephone control card 35 and the private line network PN.

As described above, according to the third embodiment, not only if the IP telephone control card 31 fails or if a problem occurs in the LAN cable connected to the IP telephone control card 31 or the following hub, but also if a problem occurs in the connected Internet provider SPB or SPC, the telephone calling can be continued.

Next, fourth to seventh embodiments of the invention provide procedures for normally receiving an incoming call from a network when a fault occurs.

### Fourth embodiment

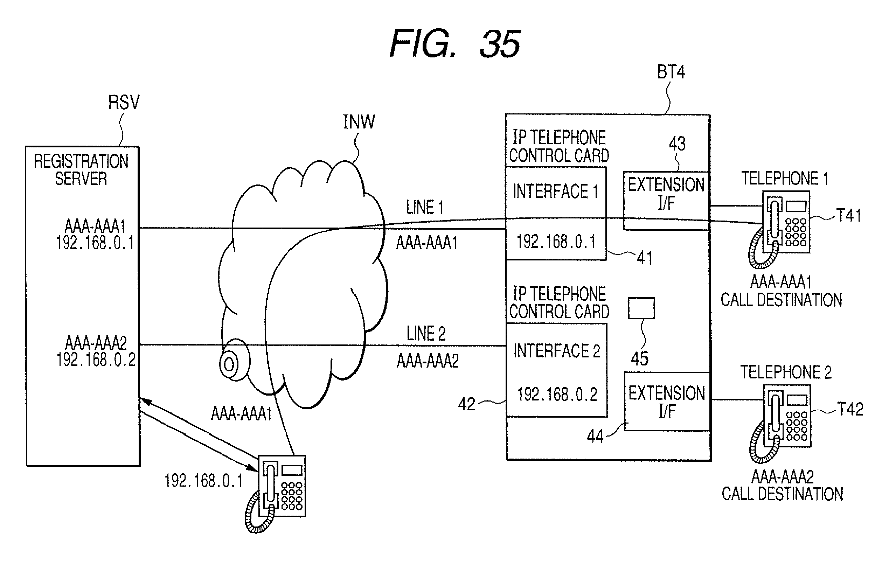

FIG. 35 is an exemplary drawing to show the schematic configuration of an IP telephone system in a fourth embodiment of the invention; BT4 denotes an IP telephone apparatus.

A registration server RSV is connected to the IP telephone apparatus BT4 through an IP network INW. IP telephone terminals T41 and T42 are connected to the IP telephone apparatus BT4.

The IP telephone apparatus BT4 includes IP telephone control cards 41 and 42 different in connection ID, extension interface units 43 and 44, and a CPU 45.

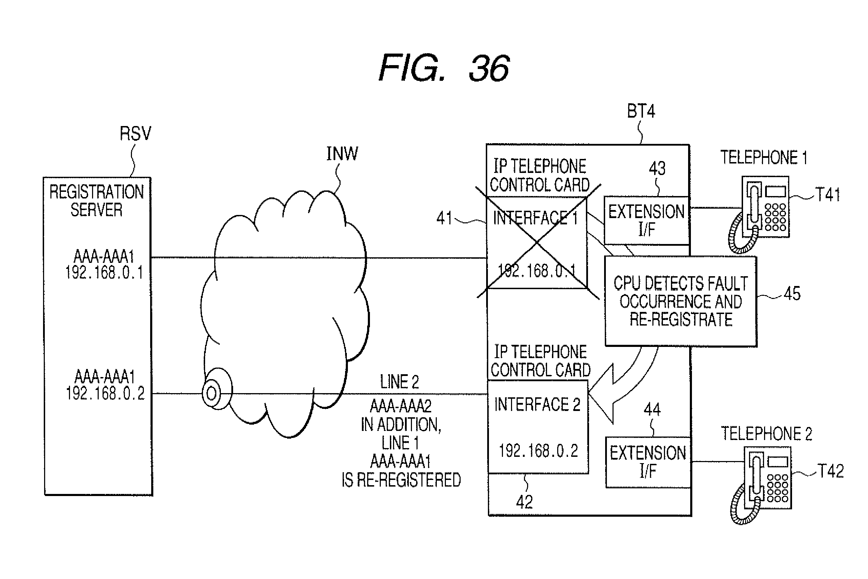

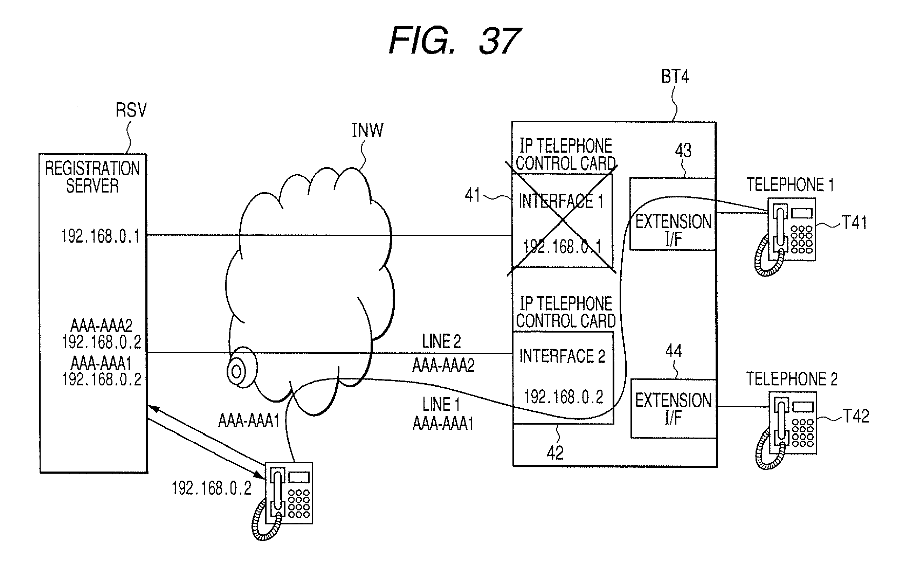

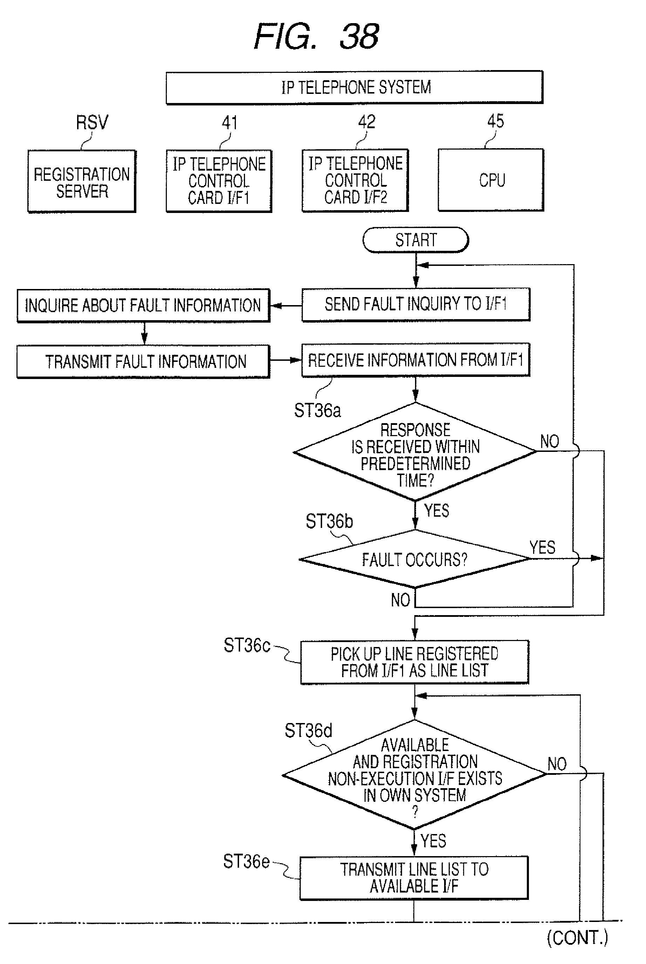

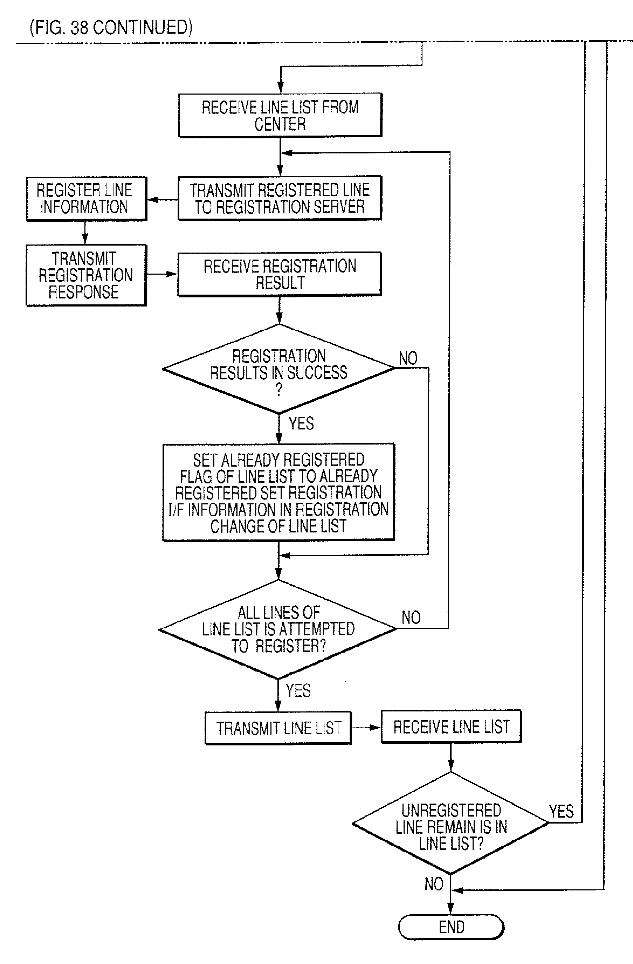

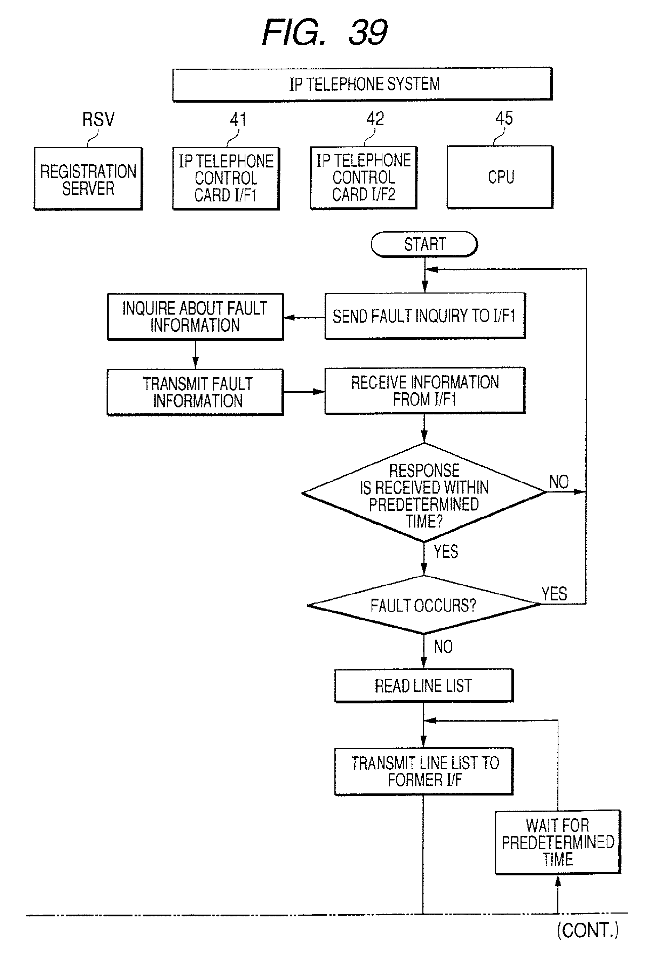

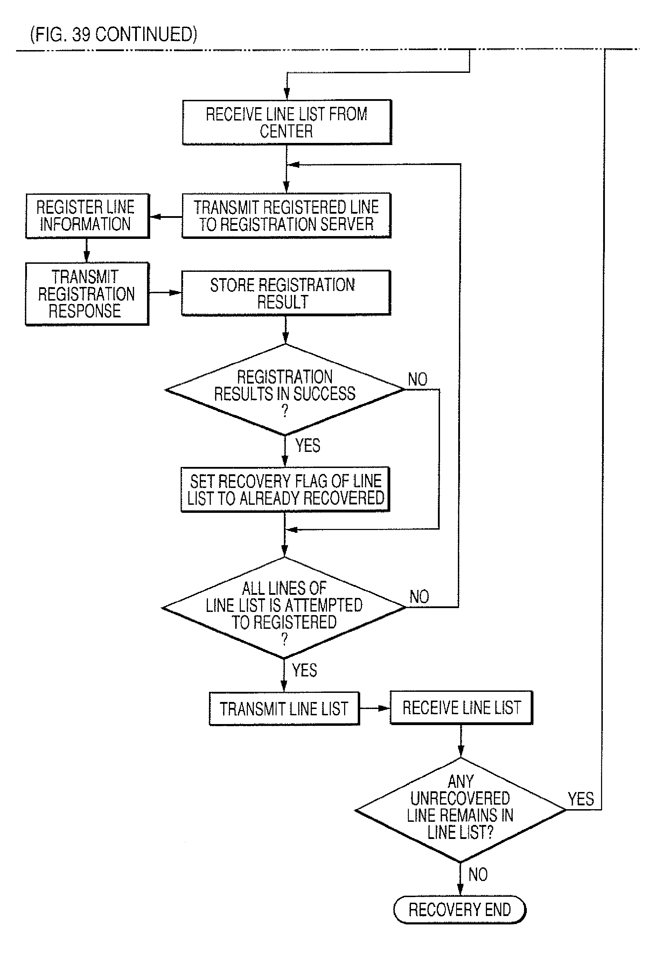

The operation of the described system is as follows: FIG. 36 is an exemplary sequence chart to show the operation of detecting fault occurrence in the IP telephone control card, FIG. 37 is an exemplary sequence chart to show the operation of re-registering in the registration server RSV at the fault occurrence time, FIG. 38 is an exemplary flowchart to show a control processing procedure between the IP telephone apparatus BT4 and the registration server RSV at the fault occurrence time, and FIG. 39 is an exemplary flowchart to show a control processing procedure between the IP telephone apparatus BT4 and the registration server RSV at the fault recovery time.

A call at line number (line ID) AAA-AAA1 comes in the IP telephone terminal T41. The line AAA-AAA1 is registered in the registration server RSV from the IP telephone control card 41 accommodated in the IP telephone apparatus BT4 (connection ID: 192.168.0.1).

In this case, for a terminal connected to the IP network INW to originate a call at AAA-AAA1, first the terminal sends inquiry to the registration server RSV. The registration result (192.168.0.1) is returned from the registration server RSV to the terminal, which then originates a call at AAA-AAA1. The call comes in the IP telephone apparatus BT4, which then rings the IP telephone terminals T41.

If the IP telephone control card 41 detects a fault or a fault occurs in the IP telephone control card 41, the CPU 45 of the IP telephone apparatus BT4 makes a transition from step ST36a to step ST36b and detects the fault and extracts a registered line list from the IP telephone control card 41 (step ST36c) and checks whether or not the IP telephone apparatus BT4 contains another IP telephone control card having the same function (step ST36d).

If the IP telephone apparatus BT4 contains IP telephone control card 42 having the same function, the IP telephone apparatus BT4 registers the line AAA-AAA1 in the registration server RSV from the card (here, I/F2: 192.168.0.2) (step ST36e).

On the other hand, the registration server RSV changes the registration from 192.168.0.1 to 192.168.0.2.

If the described procedure results in success, for a terminal connected to the IP network INW to originate a call at AAA-AAA1, first the terminal sends inquiry to the registration server RSV. The registration result (192.168.0.2) is returned from the registration server RSV to the terminal, which then originates a call at 192.168.0.2. As shown in FIG. 37, the call comes in the IP telephone apparatus BT4, which then rings the IP telephone terminals T41, so that if a fault occurs in the IP telephone control card 41, it is made possible to receive an incoming call at AAA-AAA1.

On the other hand, if the fault in the IP telephone control card 41 is recovered from, the line AAA-AAA1 is registered from the IP telephone control card 41 according to a procedure shown in FIG. 39, whereby the card (system) can be recovered to the former state.

As described above, in the fourth embodiment, a management table associating the line ID of the IP telephone control card 41 with the connection ID of the IP telephone control card 42 is generated in response to fault occurrence involved in communication in the IP telephone control card 41 and is again registered in the registration server RSV on the IP network INW. Therefore, if the IP telephone control card 41 fails or if a problem occurs in the LAN cable connected to the IP telephone control card 41 or the following hub, call terminating (incoming call) can be continued.

### Fifth embodiment

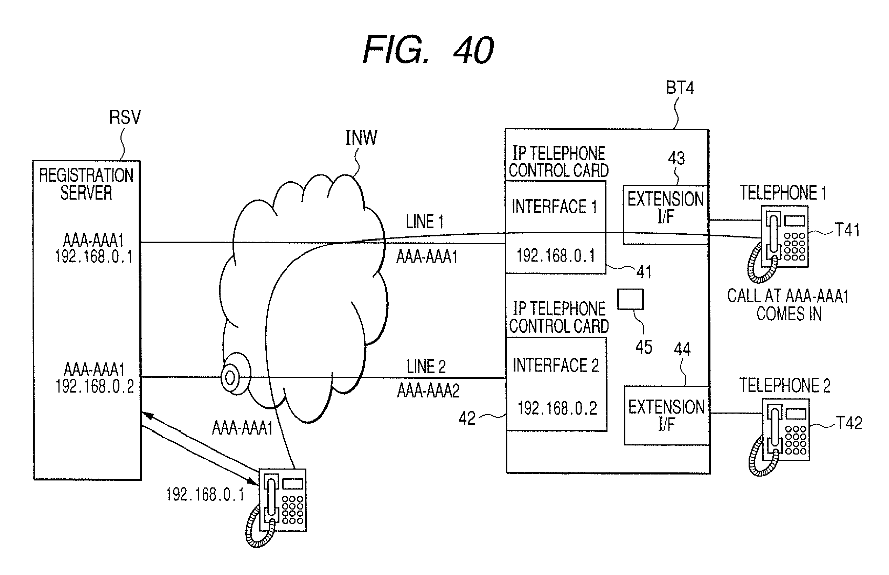

FIG. 40 is an exemplary drawing to show the schematic configuration of an IP telephone system in a fifth embodiment of the invention. Parts identical with those previously described with reference to FIG. 35 are denoted by the same reference numerals in FIG. 40 and will not be discussed again in detail.

Here, the connection ID of an IP telephone control card where a fault occurred is assigned to a normal IP telephone control card and the connection ID is sent from the normal IP telephone control card to an IP network INW.

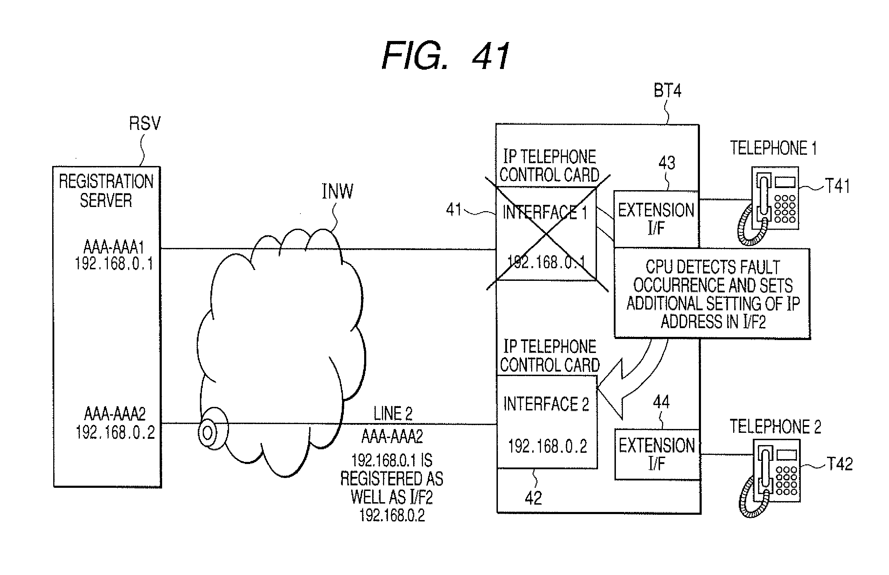

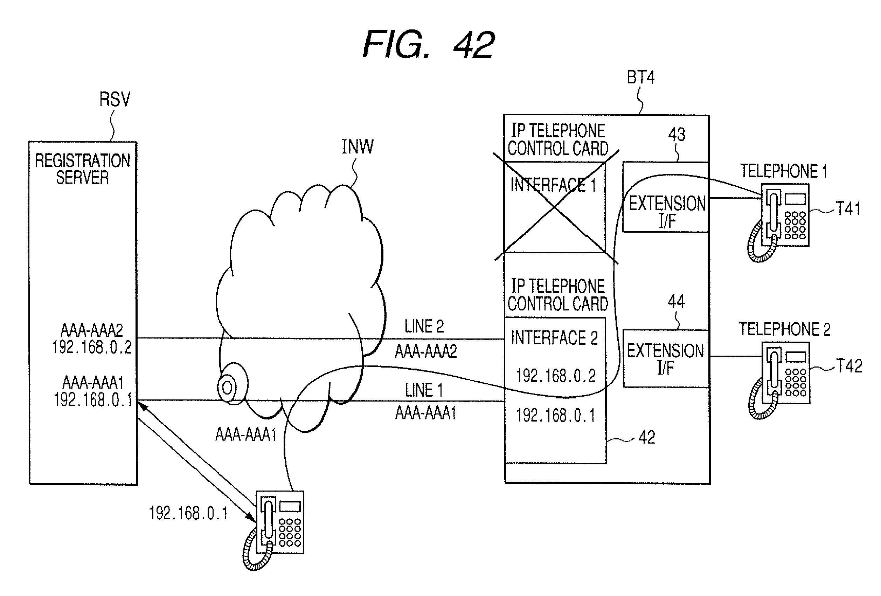

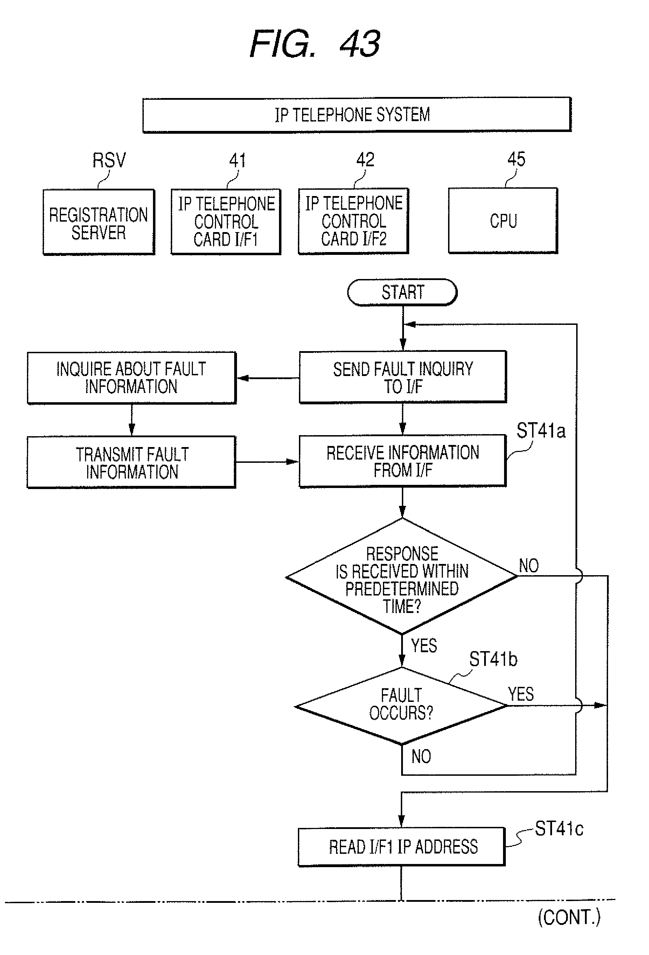

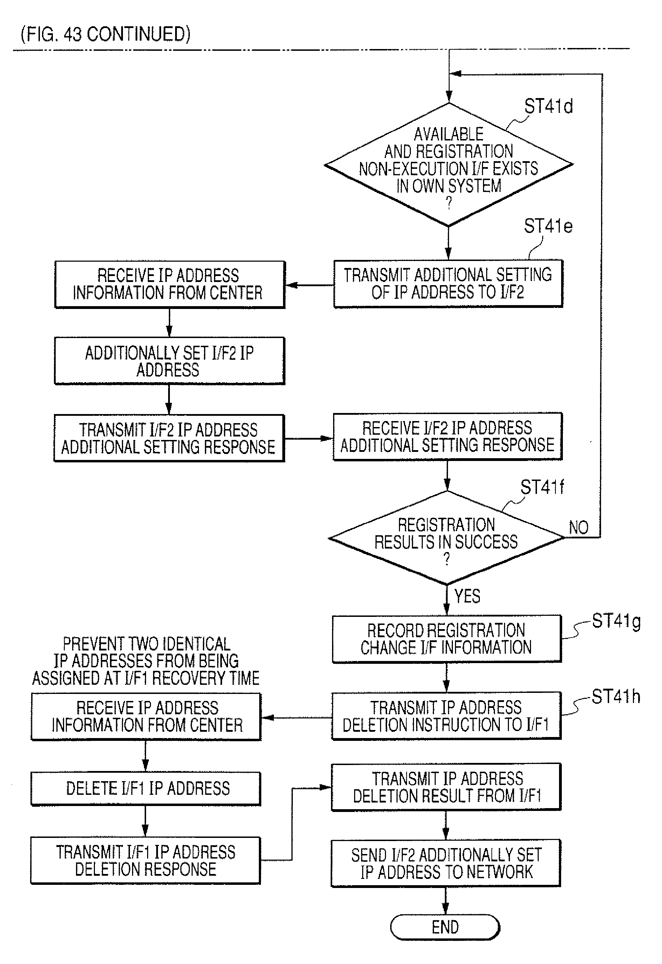

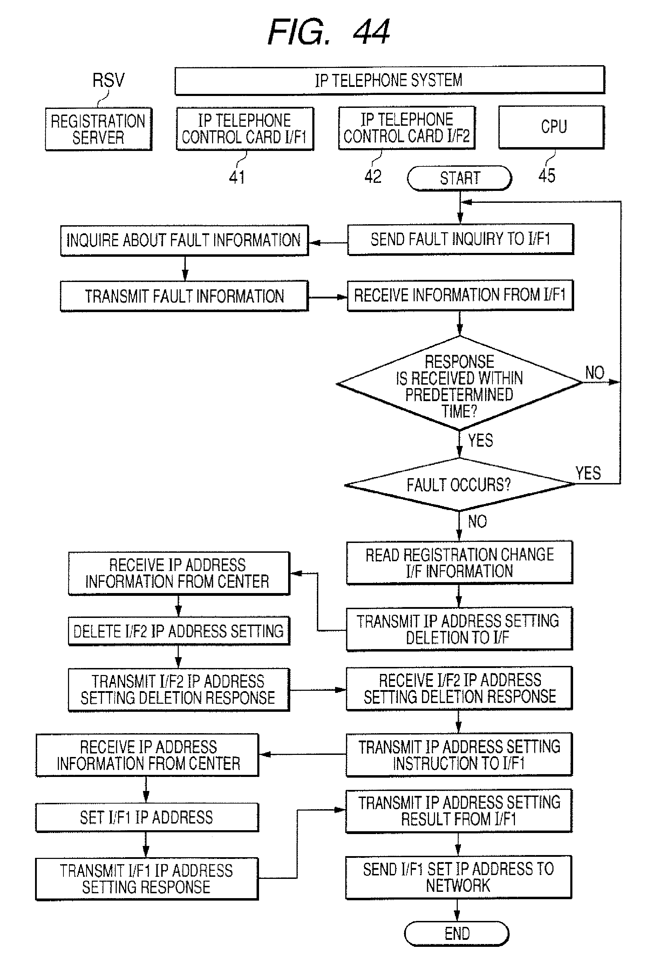

The operation of the described system is as follows: FIG. 41 is an exemplary sequence chart to show the operation of detecting fault occurrence in an IP telephone control card, FIG. 42 is an exemplary sequence chart to show the operation of sending connection ID to the IP network INW at the fault occurrence time, FIG. 43 is an exemplary flowchart to show a control processing procedure between an IP telephone apparatus BT4 and the IP network INW at the fault occurrence time, and FIG. 44 is an exemplary flowchart to show a control processing procedure between the IP telephone apparatus BT4 and the IP network INW at the fault recovery time.

A call at line number AAA-AAA1 comes in an IP telephone terminal T41. The line AAA-AAA1 is registered in a registration server RSV from an IP telephone control card 41 accommodated in the IP telephone apparatus BT4 (connection ID: 192.168.0.1).

An IP telephone control card 42 is also accommodated in the system. In this case, for a terminal connected to the IP network INW to originate a call at AAA-AAA1, first the terminal sends inquiry to the registration server RSV. The registration result (192.168.0.1) is returned from the registration server RSV to the terminal, which then originates a call at AAA-AAA1. The call comes in the IP telephone apparatus BT4, which then rings the IP telephone terminals T41.

If the IP telephone control card 41 detects a fault or a fault occurs in the IP telephone control card 41, a CPU 45 of the IP telephone apparatus BT4 makes a transition from step ST41a to step ST41b and detects the fault and reads the already registered IP address (connection ID) from the IP telephone control card 41 (step ST41c) and checks whether or not the IP telephone apparatus BT4 contains another IP telephone control card having the same function (step ST41d).

If the IP telephone apparatus BT4 contains IP telephone control card 42 having the same function, the IP telephone apparatus BT4 additionally sets the IP address of the IP telephone control card 41 in the card (here, I/F2: 192.168.0.2) as shown in FIG. 41 (step ST41e).

Accordingly, the IP telephone control card 42 has the two IP addresses of 192.168.0.1 and 192.168.0.2. If the IP address setting in the IP telephone control card 42 results in success, the IP telephone apparatus BT4 makes a transition from step ST41f to step ST41h and deletes the IP address setting in the IP telephone control card 41 for preventing the same IP address from existing more than one when the IP telephone control card 41 is recovered from the fault.

The IP telephone control card 42 uses the IP address of 192.168.0.1 to broadcast, preventing each machine existing in the network from transmitting data to the IP telephone control card 41.

If the described procedure results in success, for a terminal connected to the IP network INW to originate a call at AAA-AAA1, first the terminal sends inquiry to the registration server RSV. The registration result (192.168.0.1) is returned from the registration server RSV to the terminal, which then originates a call at 192.168.0.1. The call comes in the IP telephone apparatus BT4 through the IP telephone control card 42, and the IP telephone apparatus BT4 rings the IP telephone terminals T41, so that if a fault occurs in the IP telephone control card 41, it is made possible to receive an incoming call at AAA-AAA1, as shown in FIG. 42.

On the other hand, if the fault in the IP telephone control card 41 is recovered from, according to a procedure shown in FIG. 44, the IP address of the IP telephone control card 41 set in the IP telephone control card 42 is deleted and then the essential IP address is set in the IP telephone control card 41 for preventing the same IP address from existing more than one.

The IP telephone control card 41 uses the IP address of 192.168.0.1 to broadcast, preventing each machine existing in the network from transmitting data to the IP telephone control card 42.

As described above, in the fifth embodiment, the connection ID of the IP telephone control card 41 is assigned as the connection ID of the IP telephone control card 42 which normally operates in response to fault occurrence involved in communication in the IP telephone control card 41. Therefore, if the IP telephone control card 41 fails or if a problem occurs in the LAN cable connected to the IP telephone control card 41 or the following hub, the card is automatically switched to the normal IP telephone control card 42 without re-registration in the registration server RSV and consequently communication and call terminating (incoming call) can be continued.

### Sixth embodiment

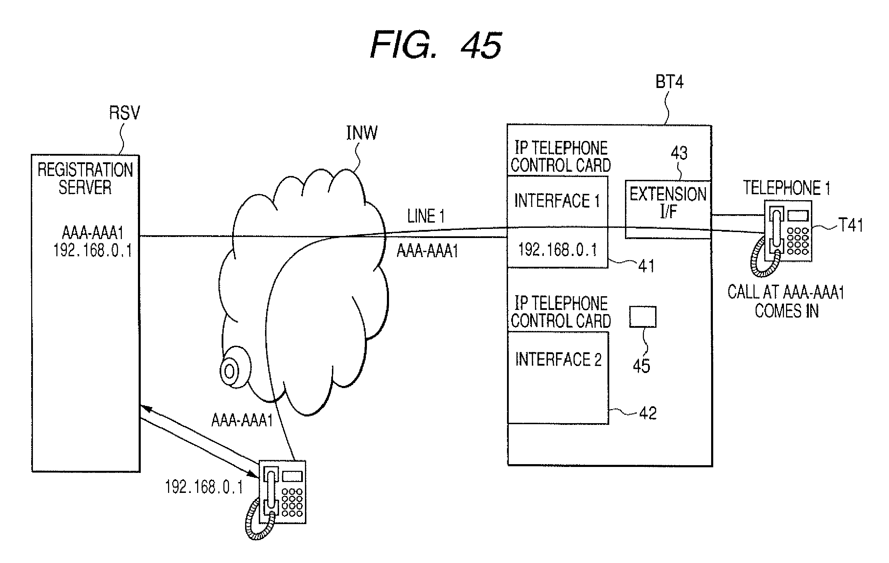

FIG. 45 is an exemplary drawing to show the schematic configuration of an IP telephone system in a sixth embodiment of the invention. Parts identical with those previously described with reference to FIG. 35 are denoted by the same reference numerals in FIG. 45 and will not be discussed again in detail.

Here, the connection ID of an IP telephone control card where a fault occurred is assigned to a standby IP telephone control card and the connection ID is sent from the standby IP telephone control card to an IP network INW.

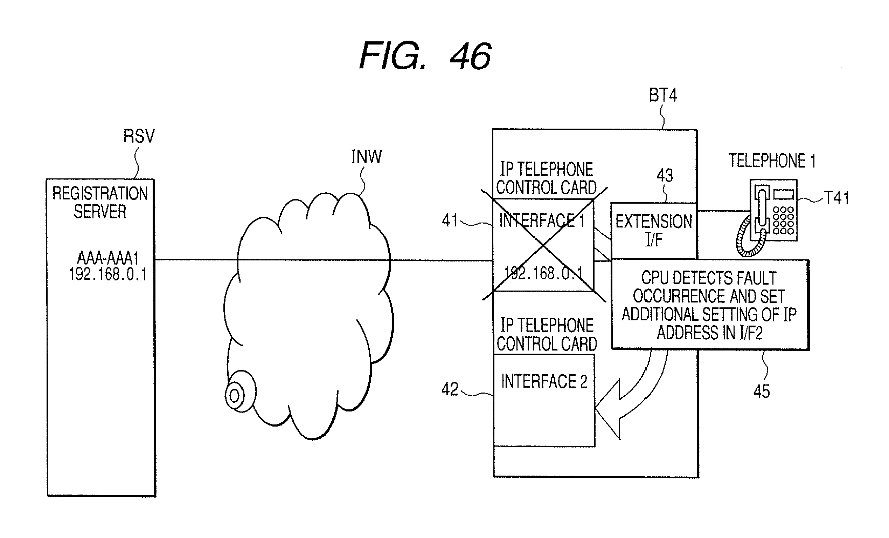

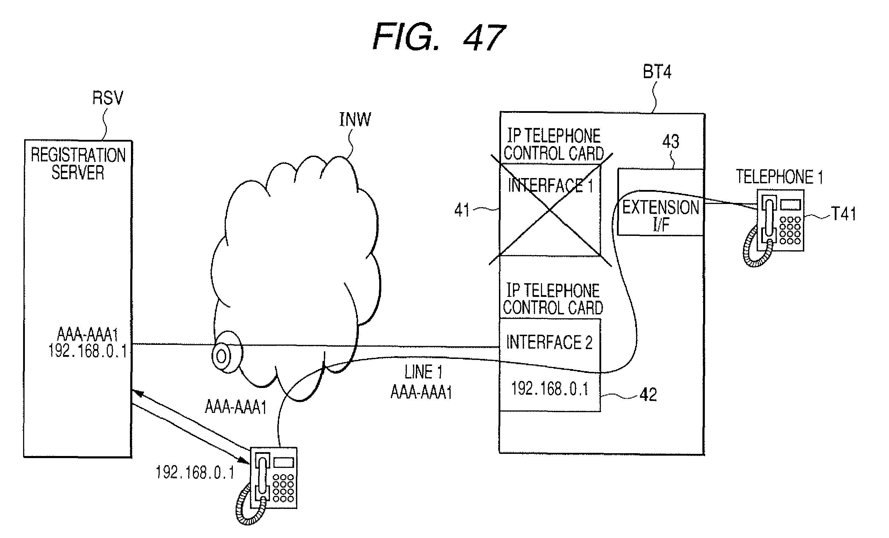

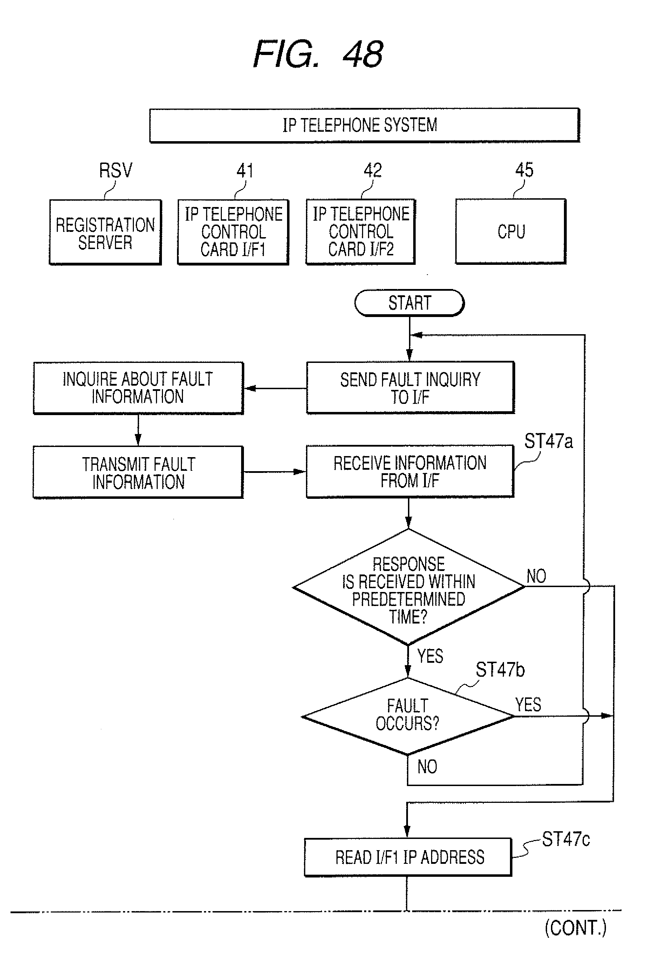

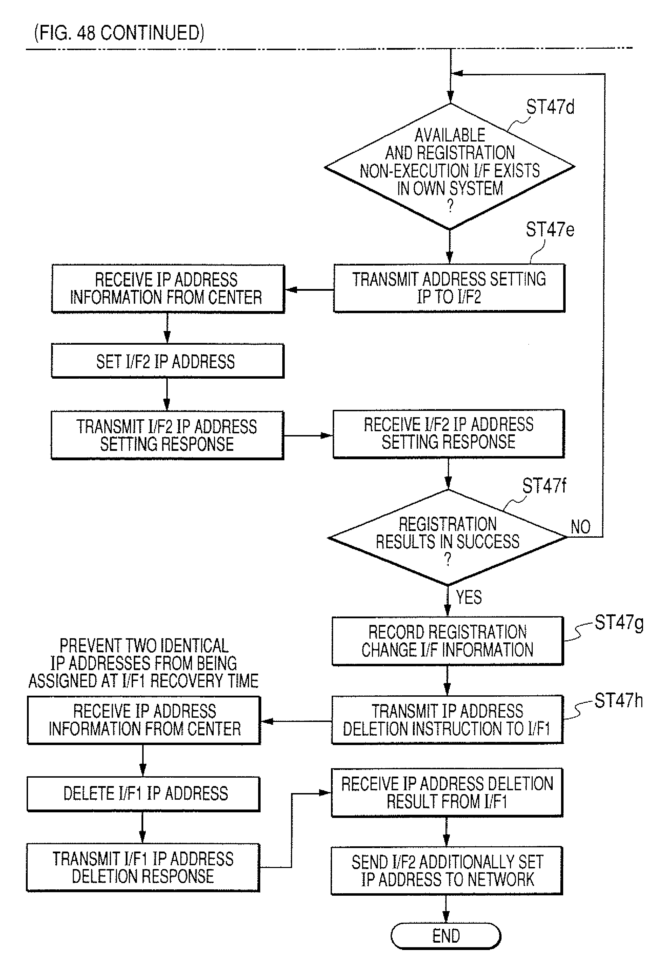

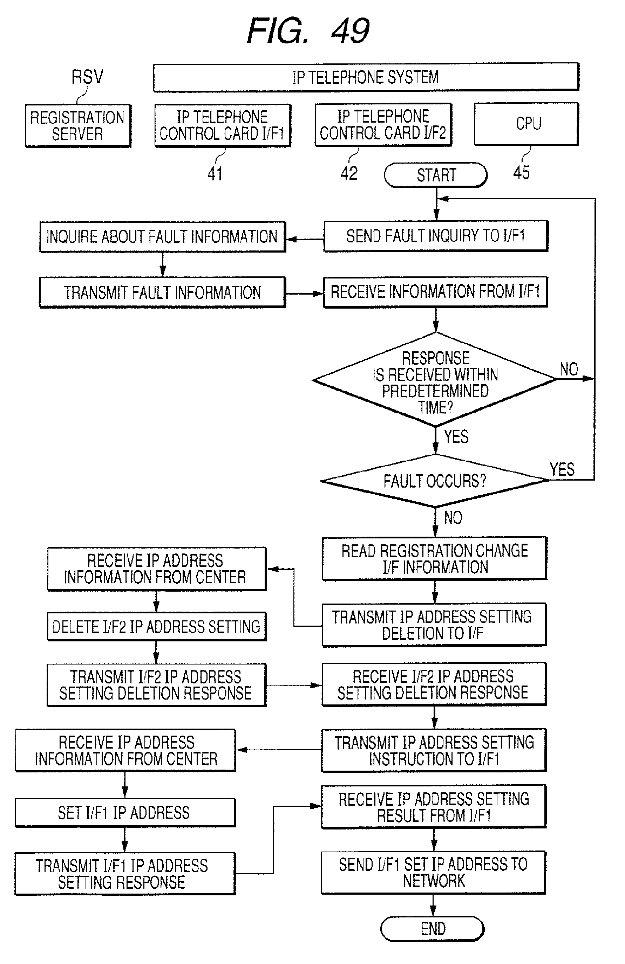

The operation of the described system is as follows: FIG. 46 is an exemplary sequence chart to show the operation of detecting fault occurrence in an IP telephone control card, FIG. 47 is an exemplary sequence chart to show the operation of sending connection ID to the IP network INW at the fault occurrence time, FIG. 48 is an exemplary flowchart to show a control processing procedure between an IP telephone apparatus BT4 and the IP network INW at the fault occurrence time, and FIG. 49 is an exemplary flowchart to show a control processing procedure between the IP telephone apparatus BT4 and the IP network INW at the fault recovery time.

A call at line number AAA-AAA1 comes in an IP telephone terminal T41. The line AAA-AAA1 is registered in a registration server RSV from an IP telephone control card 41 accommodated in the IP telephone apparatus BT4 (connection ID: 192.168.0.1).

A standby IP telephone control card 42 at the fault occurrence time is also accommodated in the system. In this case, for a terminal connected to the IP network INW to originate a call at AAA-AAA1, first the terminal sends inquiry to the registration server RSV. The registration result (192.168.0.1) is returned from the registration server RSV to the terminal, which then originates a call at AAA-AAA1. The call comes in the IP telephone apparatus BT4, which then rings the IP telephone terminals T41.

If the IP telephone control card 41 detects a fault or a fault occurs in the IP telephone control card 41, a CPU 45 of the IP telephone apparatus BT4 makes a transition from step ST47a to step ST47b and detects the fault and reads the already registered IP address (connection ID) from the IP telephone control card 41 (step ST47c) and checks whether or not the IP telephone apparatus BT4 contains standby IP telephone control card 42 having the same function (step ST47d) .

If the IP telephone apparatus BT4 contains IP telephone control card 42 having the same function, the IP telephone apparatus BT4 sets the IP address of the IP telephone control card 41 in the card as shown in FIG. 46 (step ST47e).

Accordingly, the IP telephone control card 42 has the IP address of 192.168.0.1. If the IP address setting in the IP telephone control card 42 results in success, the IP telephone apparatus BT4 makes a transition from step ST47f to step ST47h and deletes the IP address setting in the IP telephone control card 41 for preventing the same IP address from existing more than one when the IP telephone control card 41 is recovered from the fault.

The IP telephone control card 42 uses the IP address of 192.168.0.1 to broadcast, preventing each machine existing in the network from transmitting data to the IP telephone control card 41.

If the described procedure results in success, for a terminal connected to the IP network INW to originate a call at AAA-AAA1, first the terminal sends inquiry to the registration server RSV. The registration result (192.168.0.1) is returned from the registration server RSV to the terminal, which then originates a call at 192.168.0.1. The call comes in the IP telephone apparatus BT4 through the IP telephone control card 42, and the IP telephone apparatus BT4 rings the IP telephone terminals T41, so that if a fault occurs in the IP telephone control card 41, it is made possible to receive an incoming call at AAA-AAA1, as shown in FIG. 47.

On the other hand, if the fault in the IP telephone control card 41 is recovered from, according to a procedure shown in FIG. 49, the IP address of the IP telephone control card 41 set in the IP telephone control card 42 is deleted and then the essential IP address is set in the IP telephone control card 41 for preventing the same IP address from existing more than one.

The IP telephone control card 41 uses the IP address of 192.168.0.1 to broadcast, preventing each machine existing in the network from transmitting data to the IP telephone control card 42.

As described above, in the sixth embodiment, if the IP telephone control card 41 fails or if a problem occurs in the LAN cable connected to the IP telephone control card 41 or the following hub in a system using an IP telephone control card in which two or more IP addresses cannot be set, call terminating (incoming call) can be continued.

### Seventh embodiment

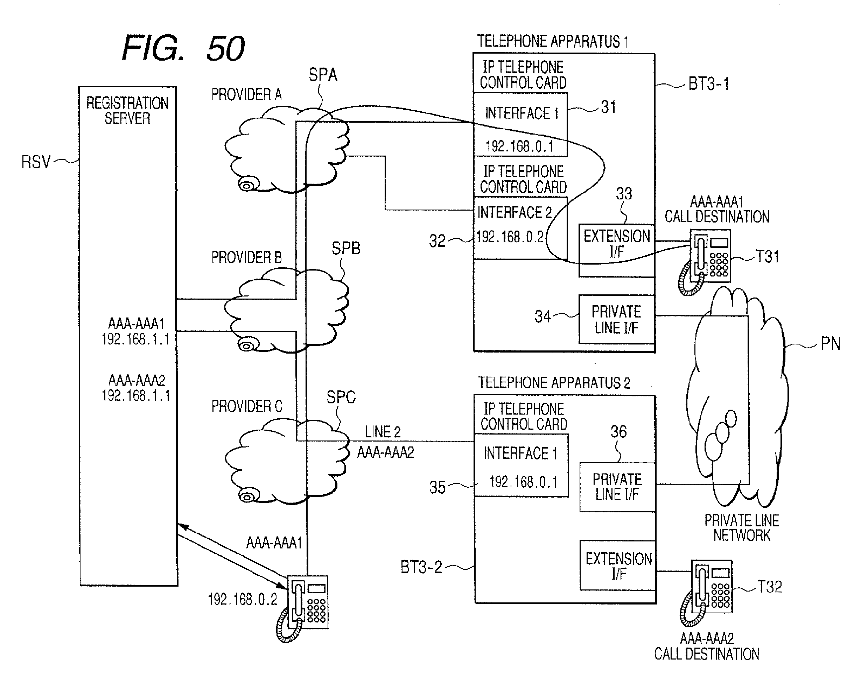

FIG. 50 is an exemplary drawing to show the schematic configuration of an IP telephone system in a seventh embodiment of the invention. Parts identical with those previously described with reference to FIG. 30 are denoted by the same reference numerals in FIG. 50 and will not be discussed again in detail.

A registration server RSV is connected to IP telephone apparatus BT3-1 and BT3-2 through Internet providers SPA, SPB, and SPC.

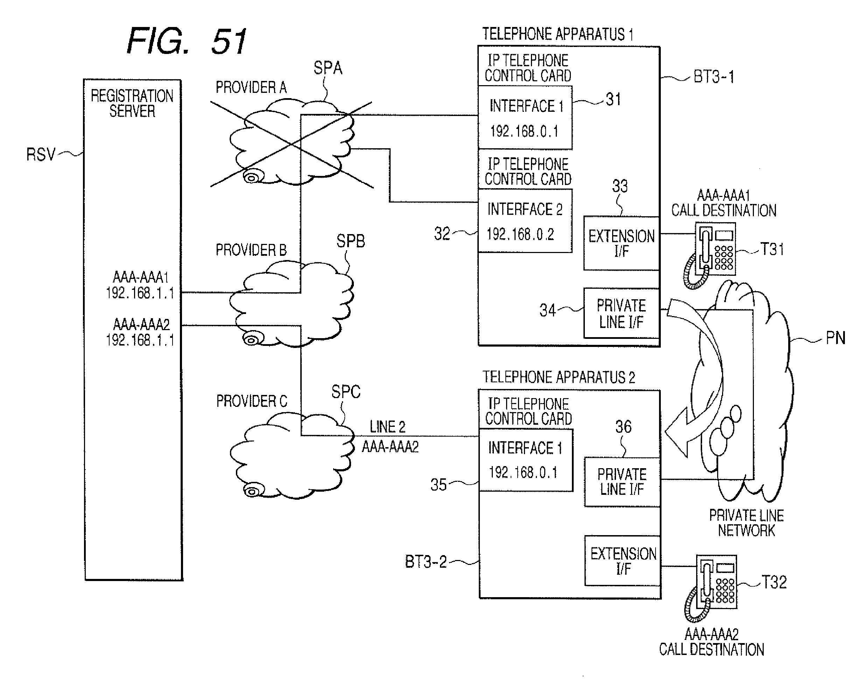

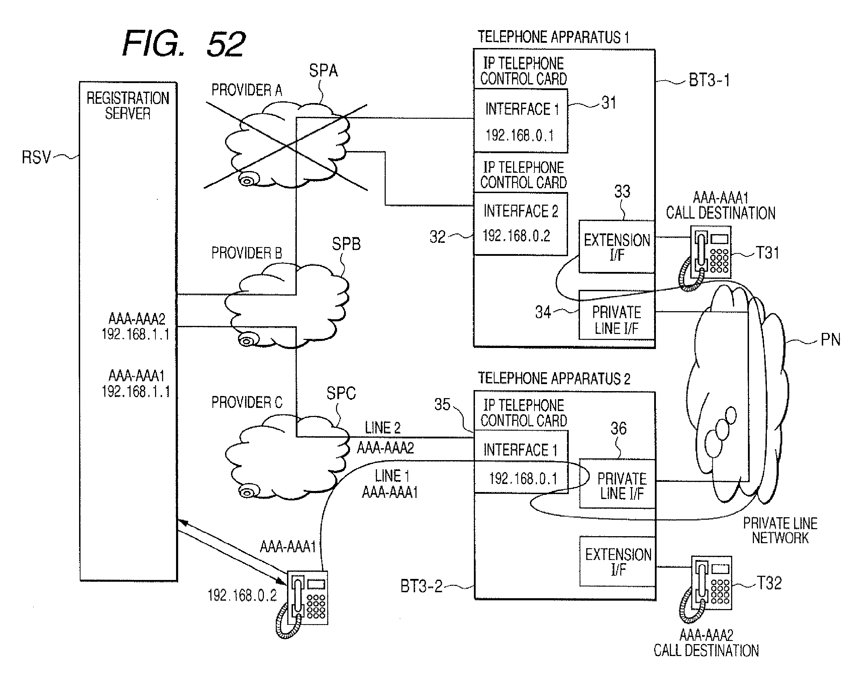

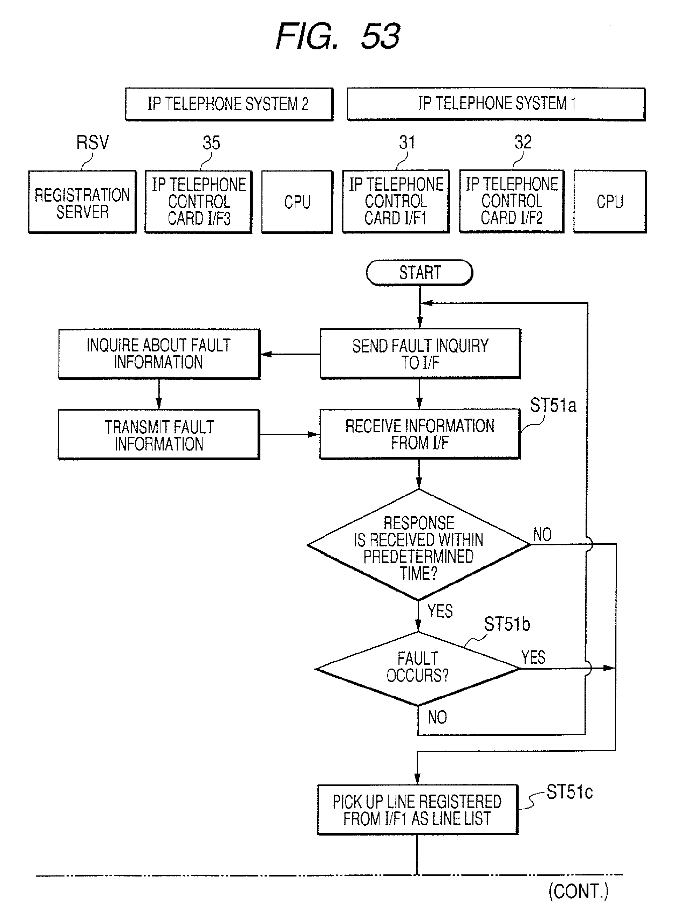

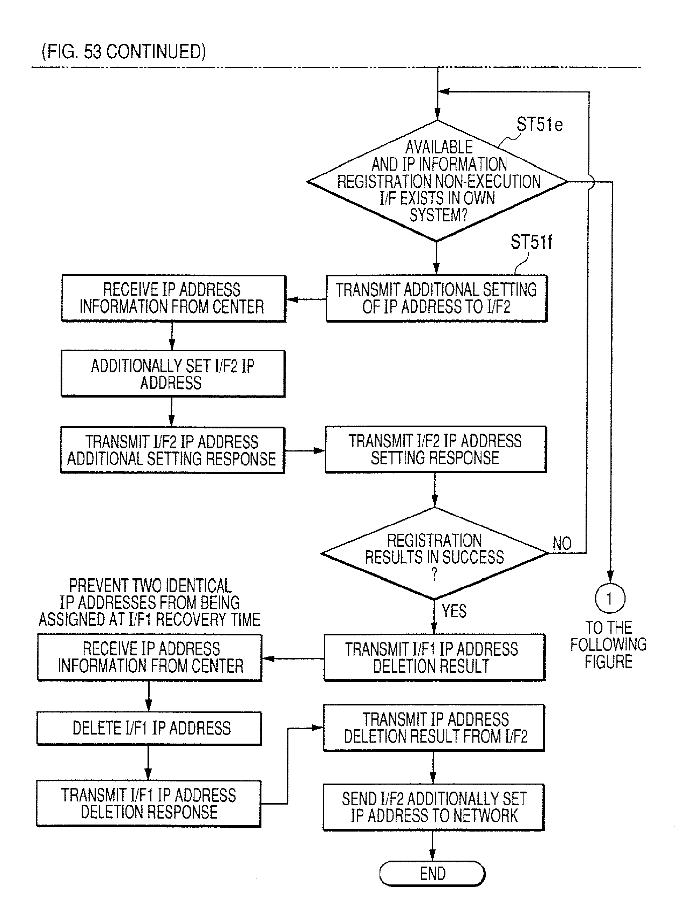

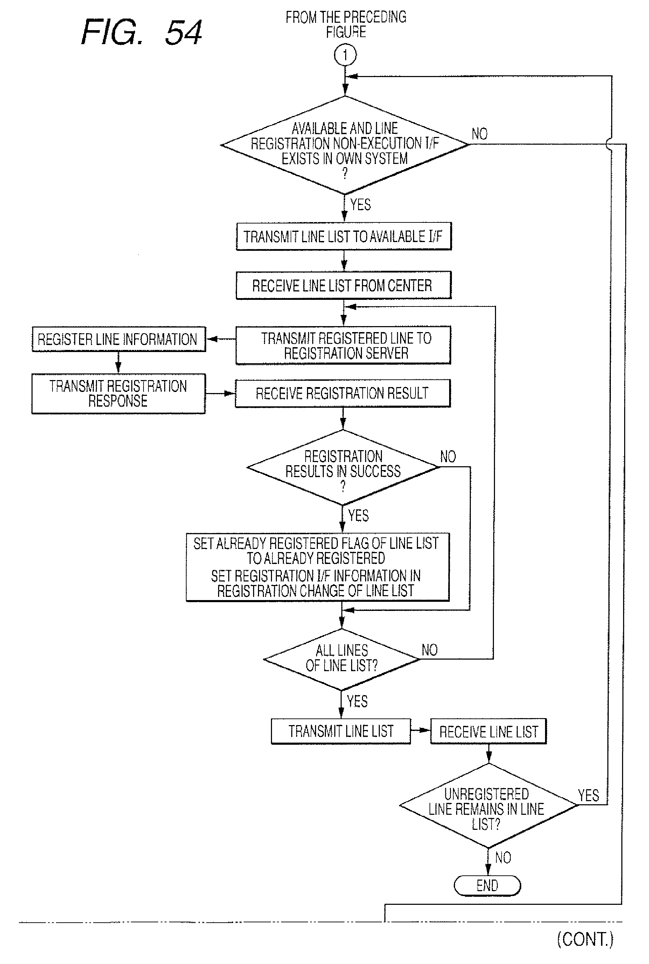

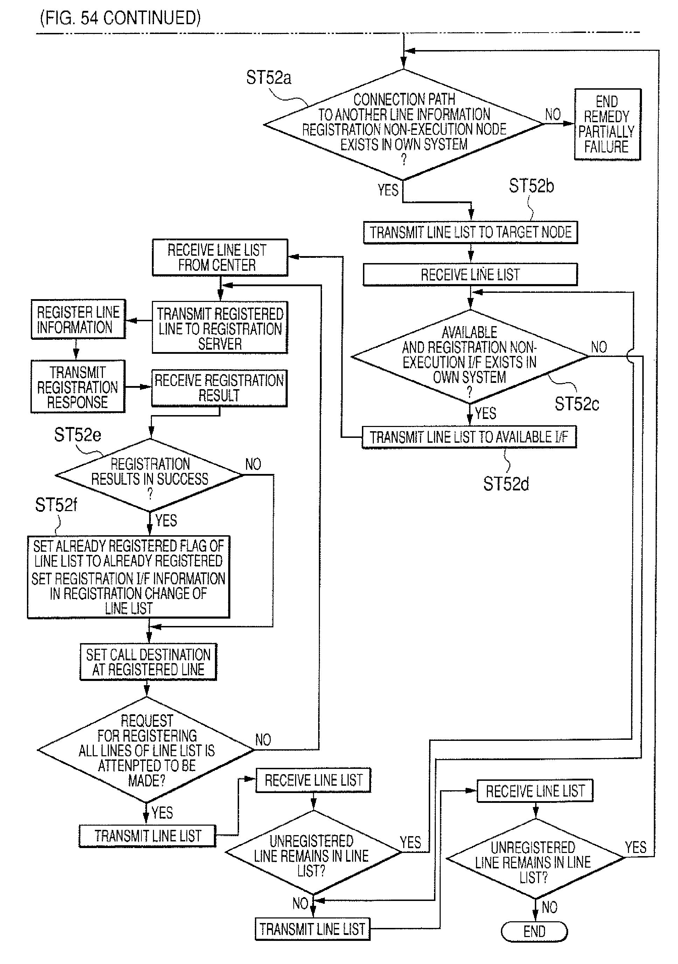

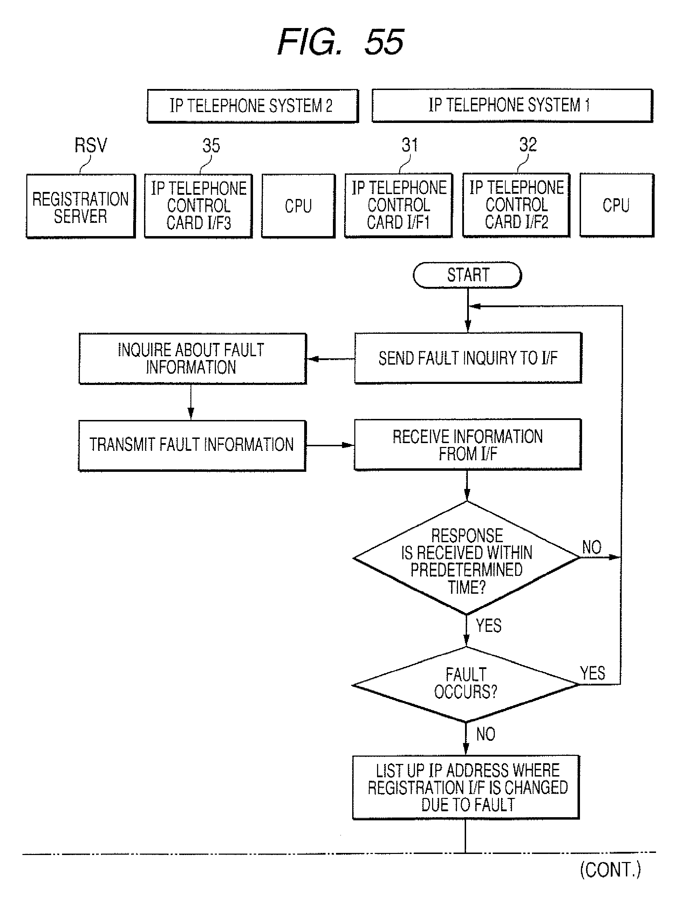

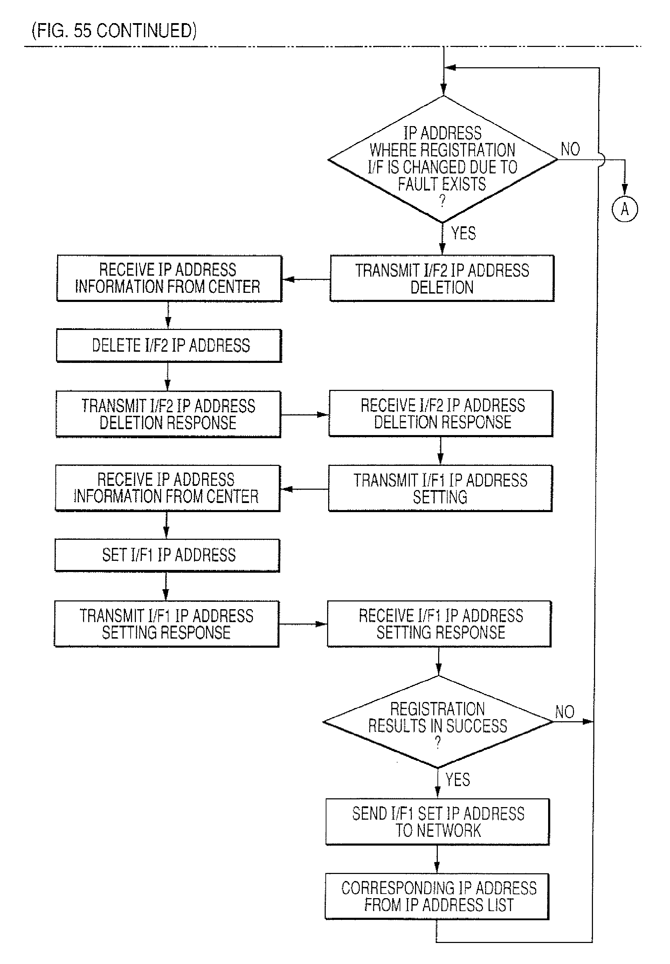

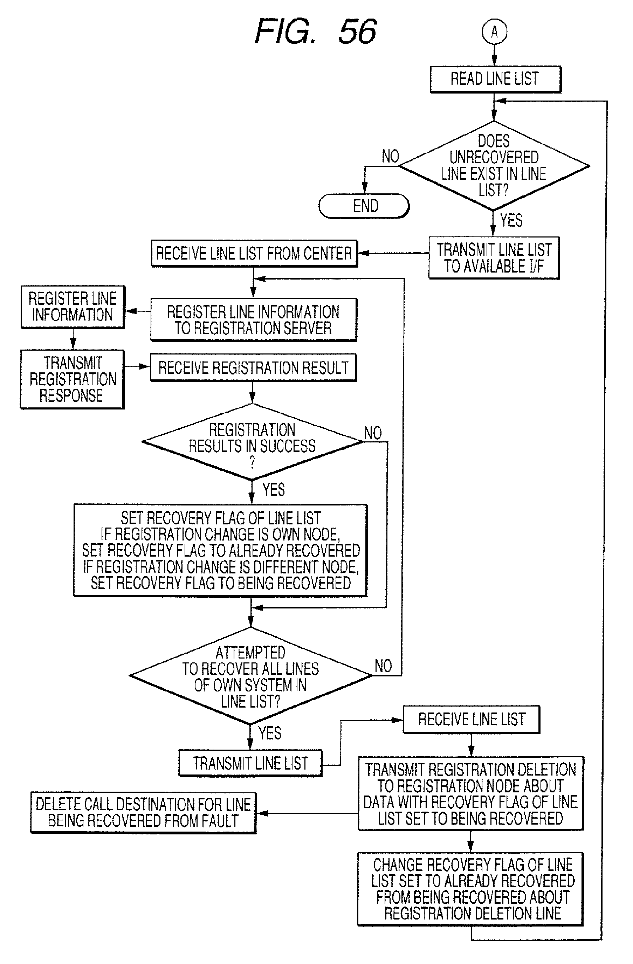

The operation of the described system is as follows: FIG. 51 is an exemplary sequence chart to show the operation of detecting fault occurrence in an Internet provider, FIG. 52 is an exemplary sequence chart to show the operation of re-registering in the registration server at the fault occurrence time, FIGS. 53 and 54 are exemplary flowcharts to show a control processing procedure among the IP telephone apparatus BT3-1 and BT3-2 and the registration server RSV at the fault occurrence time, and FIGS. 55 and 56 are exemplary flowcharts to show a control processing procedure among the IP telephone apparatus BT3-1 and BT3-2 and the registration server RSV at the fault recovery time.

An IP telephone terminal T31 is registered in the registration server RSV through an IP telephone control card 31 of the IP telephone apparatus BT3-1. The IP telephone apparatus BT3-2 has an IP telephone control card 35 and is connected to the Internet provider SPC.

If the IP telephone control card 31 detects a fault or a fault occurs in the IP telephone control card 31, a CPU of the IP telephone apparatus BT3-1 makes a transition from step ST51a to step ST51b and detects the fault and reads the already registered IP address (connection ID) and line number (line ID) from the IP telephone control card 31 (steps ST51c and ST51d) and checks whether or not the IP telephone apparatus BT3-1 contains another IP telephone control card having the same function (step ST51e).

If the IP telephone apparatus BT3-1 contains an IP telephone control card 32 having the same function, the CPU makes a transition to step ST51f and attempts to switch the IP telephone control card 31 to the IP telephone control card 32 so that a call will come therein. However, if registration in the IP telephone control card 32 results in failure or the IP telephone apparatus BT3-1 does not contain any IP telephone control card having the same function, whether or not the IP telephone apparatus BT3-1 is connected to another IP telephone apparatus is checked (step ST52a).

If the IP telephone apparatus BT3-1 is connected to IP telephone apparatus BT3-2, the IP telephone apparatus BT3-1 transmits the number and the call destination of line 1 to the IP telephone apparatus BT3-2 through a private line network PN (step ST52b).

Upon reception of the number and the call destination information of line 1, the IP telephone apparatus BT3-2 checks whether or not the own system contains an IP telephone control card (step ST52c) and if the system contains IP telephone control card 35, the IP telephone apparatus BT3-2 transmits the number of line 1 from the IP telephone control card 35 to the registration server RSV (step ST52d).

If registration from the IP telephone control card 35 results in success, the IP telephone apparatus BT3-2 makes a transition from step ST52e to ST52f and registers the call destination at the reception time of the number of line 1 in the own system.

If the described procedure results in success, for a terminal connected to the Internet provider SPC to originate a call at AAA-AAA1, first the terminal sends inquiry to the registration server RSV. The registration result (192.168.1.1) is returned from the registration server RSV to the terminal, which then originates a call at 192.168.1.1. The call comes in the IP telephone apparatus BT3-2 through the IP telephone control card 35. In the IP telephone apparatus BT3-2, the IP telephone apparatus BT3-1 is set as the call destination at AAA-AAA1 and therefore the call comes in the essential call destination of the IP telephone apparatus BT3-1 through the private line network PN.

When the fault in the IP telephone control card 31 is recovered from, according to a procedure shown in FIGS. 55 and 56, if the IP address of the IP telephone control card 31 is set in the IP telephone control card 32, the address is deleted and then the essential IP address is set in the IP telephone control card 31 for preventing the same IP address from existing more than one. Then, the IP telephone control card 31 uses the IP address to broadcast, preventing each machine existing in the network from transmitting data to the IP telephone control card 32.

If the line number is registered in the registration server RSV from the IP telephone control card 35, the line number is again registered in the registration server RSV from the IP telephone control card 31. At this time, registration of the call destination for the IP telephone apparatus BT3-1 is left in the IP telephone apparatus BT3-2 and thus the line number whose registration results in success from the IP telephone control card 31 is transmitted to the IP telephone apparatus BT3-2, which then deletes the call destination registration of the corresponding number.

Thus, if a fault occurs in the IP telephone control card 31, it is made possible to receive an incoming call at AAA-AAA1.

As described above, according to the seventh embodiment, not only if the IP telephone control card 31 fails or if a problem occurs in the LAN cable connected to the IP telephone control card 31 or the following hub, but also if a problem occurs in the connected Internet provider SPA, call terminating (incoming call) can be continued.

### Other embodiments

The invention is not limited to the specific embodiments described above. For example, the embodiments and modified examples are appropriately selected and used in combination according to the fault occurrence type and the call state, whereby an IP telephone system that can deal with a wide range of fault from fault in an IP telephone control card to machine failure in a network to provider service interruption and can continue telephone calling and call terminating (incoming call) even at the fault occurrence time can be constructed.

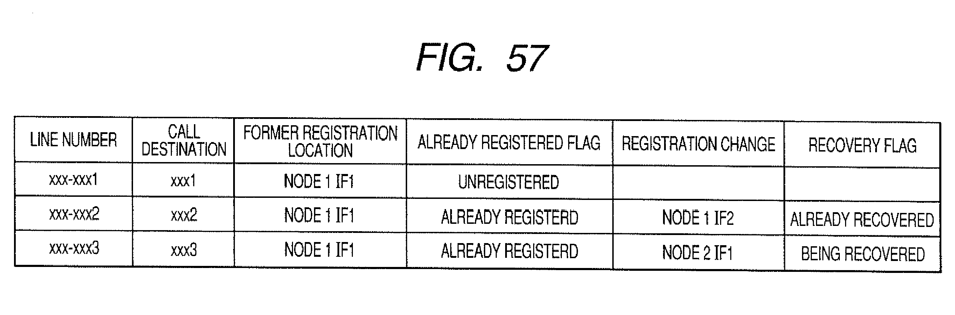

In the fourth to seventh embodiments described above, a line list as shown in FIG. 57 is stored and managed in the IP telephone apparatus.

In addition, the system configuration, the fault detection control procedures, the communication route switching control procedures, and the like can also be modified in various manners without departing from the spirit and the scope of the invention.

## Claims

1. An IP telephone system that enables a first telephone terminal and a second telephone terminal to communicate with each other using an internet protocol, the IP telephone system comprising:
a detection unit that, when the first and second telephone terminals communicate with each other through a first communication route, detects a communication fault in a communication between the first and second telephone terminals; and
a controller that switches a communication route from the first communication route to a second communication route different from the first communication route.

2. The IP telephone system according to claim 1,
wherein the first telephone terminal is connected to a first IP network among a plurality of IP networks that are connected one another through a plurality of connection units,
wherein the second telephone terminal is connected to a second IP network among the plurality of IP networks,
wherein the first communication route includes a part of the IP networks and a part of the connection units connecting the part of the IP networks, and
wherein the second communication route includes other part of the IP networks and other part of the connection units.

3. The IP telephone system according to claim 1, further comprising a telephone exchange to which the first and second telephone terminals are connected and that connected to an IP network, and includes a plurality of interface units,
wherein a telephone terminal connected to the IP network and either a telephone terminal connected to the IP network or a telephone terminal connected to the telephone exchange communicate with each other through at least a part of the interface units,
wherein the first communication route includes one of the interface units, and
wherein the second communication route includes another one of the interface units different from the one of the interface units.

4. The IP telephone system according to claim 3,
wherein the second telephone terminal is connected to the IP network.

5. The IP telephone system according to claim 3,
wherein both the first and second telephone terminals are connected to the IP network.

6. The IP telephone system according to claim 3,
wherein the telephone exchange includes first and second telephone exchanges,
wherein the first and second telephone terminals are connected to the IP network,
wherein the one of the interface units is included in the first telephone exchange, and
wherein the another one of the interface units is included in the second telephone exchange.

7. The IP telephone system according to claim 3,
wherein the detection unit and the controller are provided in a server connected to the IP network.

8. The IP telephone system according to claim 1,
wherein the first telephone terminal is connected to a first telephone exchange to which a second telephone exchange is connected by a private line, the first and second telephone exchanges being connected to an IP network,
wherein the second telephone terminal is connected to the IP network,
wherein the first communication route includes the first telephone exchange, and
wherein the second communication route includes the second telephone exchange and the private line.

9. A telephone exchange to which a plurality of telephone terminals are connectable and that includes a plurality of interface units through which the telephone terminals are capable of communicating with an IP network by registering a first management table stored in a registration server connected to the IP network, the first management table associating connection IDs identifying the interface units and line IDs identifying a plurality of lines on the IP network, the telephone exchange comprising:
a detection unit that detects a communication fault in a communication through each of the interface units including first and second interface units; and
a controller that, when the detection unit detects a communication fault in a communication through the first interface unit, generates a second management table that associates a line ID associated with a connection ID for the first interface unit in the first management table, with a second connection ID for the second interface unit and updates the first management table to the second management table.

10. A telephone exchange to which a plurality of telephone terminals are connectable and that includes a plurality of interface units through which the telephone terminals are capable of communicating with an IP network by registering a first management table stored in a registration server connected to the IP network, the first management table associating connection IDs identifying the interface units and line IDs identifying a plurality of lines on the IP network, the telephone exchange comprising:
a detection unit that detects a communication fault in a communication through each of the interface units including first and second interface units; and
a controller that, when the detection unit detects a communication fault in a communication through the first interface unit, assigns a connection ID for the first interface unit to a connection ID for the second interface unit, and controls the second interface unit to notify the assigned connection ID to the IP network.

11. The telephone exchange according to claim 10,
wherein the second interface unit is for standby use, and
wherein the controller includes a notifying unit that controls the second interface unit to notify the assigned connection ID to the IP network.

12. An IP telephone system wherein a plurality of telephone terminals are connected to a plurality of telephone exchanges that are connectable to an IP network, the telephone exchanges including first and second telephone exchanges connected with each other by a private line and the telephone terminals are capable of communicating with an IP network through a plurality of interface units using a first management table stored in a registration server connected to the IP network, the first management table associating connection IDs identifying the interface units and line IDs identifying a plurality of lines on the IP network, the IP telephone system comprising:
a detection unit that detects a communication fault in a communication through each of the interface units including first and second interface units provided in the first and second telephone exchanges, respectively; and
a controller that when the detection units detects a communication fault in a communication through the first interface unit in the first telephone exchange, generates a second management table that assigns a line ID associated with a connection ID for the first interface unit in the first management table, to a second connection ID for the second interface unit in the second telephone exchange, and updates the first management table to the second management table.
